# EUROPEAN PATENT SPECIFICATION

(11) **EP 3 065 554 B1**
(45) Date of publication and mention of the grant of the patent: **13.09.2017**
(21) Application number: 14793801.3
(22) Date of filing: 16.10.2014
(51) Int. Cl.: A23D 9/00, A23L 5/00, A23L 29/262, A23L 29/275, A23C 3/00, A23C 9/12, A23P 10/30, A23P 20/18

(54) **MULTILAYER MICROCAPSULES CONTAINING AN OXIDIZABLE ACTIVE, AND A PROCESS FOR PREPARING THE SAME**
MEHRSCHICHTIGE MIKROKAPSELN MIT EINEM OXIDIERBAREN AKTIVSTOFF UND VERFAHREN ZUR HERSTELLUNG DAVON
MICROCAPSULES MULTICOUCHES CONTENANT UN ACTIF OXYDABLE ET SON PROCÉDÉ DE PRÉPARATION

(30) Priority: 16.10.2013 EP 13306422
(43) Date of publication of application: 14.09.2016
(73) Proprietor: IDCAPS, 17000 La Rochelle (FR)
(72) Inventor: BUISSON, Pierre, F-17140 LAGORD (FR); CHAIGNEAU, Carine, F-17540 Angliers (FR); VENDEVILLE, Jean-Eudes, F-17180 Perigny (FR)
(74) Representative: Grosset-Fournier, Chantal Catherine
(86) International application number: PCT/EP2014/072240
(87) International publication number: WO 2015/055775

(56) References cited:
- EP-A1- 1 300 394
- WO-A2-2010/013250
- US-A- 5 780 056
- US-A1- 2007 141 211
- US-A1- 2009 004 333

## Description

The present invention relates to multilayer microcapsules containing an oxidizable active, and a process for preparing the same.

There is an increasing need in the industry, for example in the food, pharmaceutical or cosmetics industry, for protection of active agents from the medium that surrounds said active agents in particular to achieve a better conservation of said active agents.

One of the main issues of encapsulation is to be able to protect drugs from external medium but also to allow the right release or the right access to this drug when needed. This access is very often possible through a quick or controlled release in the medium, due to chosen properties of the encapsulating agent.

This dual aim of protection and release becomes more complex as soon as exchanges between drugs and medium need to be kept out of direct interactions in-between drug and external medium. S.K. Tam and al. have shown (in Vandamme et al Microencapsulation; Tec & Doc; 2007; Chapter 11) these issues when the microencapsulation aims to allow therapeutic effects through useful component exchanges, components which are able to cross the microencapsulation barriers while preserving drugs from being in direct contact with other potentially damaging components, if they had entered the microcapsule. US2009/0004333 relates to a microencapsulated product comprising a core, a first shell comprising a protein and being carbohydrate-free, and a second shell comprising a carbohydrate and being protein-free. The double shell structure provides a strong shell that makes the microcapsule suitable for use in food products. The core can be a lipid, and in particular a structured lipid with nutritional benefits, such that the nutritional benefits can be passed on to the consumer. The microcapsules can be used in making foods products, beverage products, and mixes for making such food and beverage products. US20070141211 discloses encapsulated phospholipid stabilised oxidizable material. A microcapsule comprises a core material, which is the phospholipid-stabilized oxidizable material, and a shell wall that encapsulates the core material. Food products comprising an edible material and a microcapsule of phospholipid-stabilized oxidizable material are described. In case of oxidizable drugs, the issue is to be able to get microcapsules which are able to protect these drugs from oxidation, and to protect the external medium from component issued from oxidation of said drugs.

Drug encapsulation is usually made with monolayer coating, the quality of which is due mainly to the thickness of the encapsulation, i.e. the percentage of the mass of the oxidizable agent over the total mass of the microcapsule.

Formulations containing less than 50% of oxidizable agent occur frequently, some formulations containing oxidizable agents in percentages as low as 10%, due to this need of efficiency of the encapsulation.

Other microcapsules allow a very good ratio of oxidizable agent, up to 95% in mass, but with such a low ratio, the capsule performance is not as good as required in several applications. Different kinds of problems have to be solved:
- Oxidation of the oxidizable agent occurs during shelf life of capsules in liquid formulation. For example a loss of 30% to 40% of the oxidizable agent can occur in a beverage, after 30 days;
- Mechanical resistance needs also to be improved. For example, shear stress due to process like homogenization leads to partial destruction of the capsules. Thus part of the oxidizable agent is no more protected. Thus an increase of the resistance of the encapsulation is needed.
- Thermal resistance is also needed for some applications. For example pasteurization treatments, for instance a temperature of 75°C for 15 seconds can destroy part of the oxidizable agent.

Thus, one aim of the present invention is to provide microcapsules able to protect an active from oxidation by a given alimentary, cosmetically or pharmaceutically acceptable medium in which said microcapsules are placed.

Another aim of the present invention is to provide microcapsules able to protect an active from oxidation by a given alimentary, cosmetically or pharmaceutically acceptable medium in which said microcapsules are placed, said microcapsules having a high content of active, from 50% up to 95%, in particular up to 99.5% in mass.

Another aim of the present invention is to provide microcapsules able to protect the alimentary, cosmetically or pharmaceutically acceptable medium in which said microcapsules are placed from the active contained in said microcapsules.

Thus, the present invention relates to a microcapsule consisting in or containing:
- a core consisting in or comprising an oxidizable active (OA),
   said core being optionally surrounded by a precoating consisting in or comprising an antioxidant compound X,
   said core, optionally surrounded by a precoating consisting in or comprising said antioxidant compound X, being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   the first or the second layer from the core optionally comprising further an antioxidant compound Y,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

Said microcapsules contain (2 + m + n) layers of encapsulating agent (EA) and means of inducing water insolubility (MII), in other words:
- 2m + 2 layers, when the first layer is a EA 1, and
- 2m + 1 layers, when the first layer is MII 1.

Consequently, said microcapsules contain (2 + m + n) alternate layers of EA and MII.

Said microcapsules contain optionally a further precoating consisting in or comprising an antioxidant compound X, and/or a further coating consisting in or comprising a water insoluble compound.

By "starting with a layer of the same nature as the nature of the first one", is meant that:
- said alternation of (m + n) layers starts with a water soluble or organic solvent-soluble encapsulating agent (EA 2) when the first layer from the core is a water soluble or organic solvent-soluble encapsulating agent (EA 1);
- said alternation of (m + n) layers starts with means for inducing water insolubility (MII 2) when the first layer from the core is means for inducing water insolubility (MII 1).

By "alternation" is meant a group of (n + m) layers wherein layers of EA2 alternate with layers of MII 2, starting with a layer as described above, and finishing with a layer of MII 2.

In an advantageous embodiment the present invention relates to a microcapsule consisting in or containing:
- a core consisting in or comprising an oxidizable active (OA),
   said core being optionally surrounded by a precoating consisting in or comprising an antioxidant compound X,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   the first or the second layer from the core optionally comprising further an antioxidant compound Y,
   and
- an alternation of n layers of said EA 1 and of m layers of said MII 1, surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 1.

In an advantageous embodiment the present invention relates to a microcapsule consisting in or containing:
- a core consisting in or comprising an oxidizable active (OA),
   said core being optionally surrounded by a precoating consisting in or comprising an antioxidant compound X,
   said core, optionally surrounded by a precoating consisting in or comprising said antioxidant compound X, being surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   the first or the second layer from the core optionally comprising further an antioxidant compound Y,
   and
- an alternation of n layers of said EA 1 and of m layers of said MII 1, surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1, the last layer being MII 1.

By "water insoluble compound" is meant a compound that is sufficiently insoluble in water to form a turbid solution to the naked eye at a concentration of 1 to 5% in weight in water at 25°C.

Said water insoluble compound is soluble in an organic solvent.

By "organic solvent-soluble compound" is meant a compound that is sufficiently soluble in an organic solvent, in particular ethanol, to form a clear solution to the naked eye at a concentration of 5% in weight in said organic solvent at 25°C.

Said water insoluble compound is in particular selected from cellulose polymers, for example ethylcellulose.

In an advantageous embodiment, the present invention relates to a microcapsule wherein:
- the EA 2 of said n layers are identical,
- the MII 2 of said m layers are identical,
- EA 1 is not identical to said EA 2, and/or MII 1 are not identical to said MII 2.

In an advantageous embodiment, the present invention relates to a microcapsule wherein:
- the EA 2 of said n layers are not identical, and/or
- the MII 2 of said m layers are not identical,
each EA 2 being preceded and/or followed by means for inducing water insolubility (MII 2) of said EA2.

The EA 1 and the MII 1 of said first and second layers can be respectively identical to or different from the EA 2 and the MII 2 of said alternation of (m + n) layers.

Five cases can be distinguished:
- in the first case, all the EA are identical and all the MII are identical;
- when the EA and the MII of said first and second layers (EA 1 and MII 1) are respectively different from the EA and the MII of said alternation of m+n layers (EA 2 and MII 2):
   ∘ when the first layer is MII 1 and second layer is EA 1, the first MII 2 from the core are not means to induce water insolubility of EA 1 (second case),
   ∘ when the first layer is EA 1 and the second layer is MII 1, MII 1 are not means to induce water insolubility of the first EA 2 from the core (third case);
   ∘ when the first layer is MII 1 and second layer is EA 1, the first MII 2 from the core are means to induce water insolubility of EA 1 (fourth case),
   ∘ when the first layer is EA 1 and the second layer is MII 1, MII 1 are means to induce water insolubility of the first EA 2 from the core (fifth case).

At the interface between the first and the second layers, EA 1 is made insoluble by MII 1, forming a water insoluble coating at said interface.

Regarding said alternation, when all EA 2 are identical and all MII 2 are identical, at the (m + n -1) interfaces between EA 2 and MII 2, EA 2 is made insoluble by MII 2, forming a water insoluble coating at said interface.

Regarding said alternation, when all EA 2 are not identical and/or all MII 2 are not identical, there at least n interfaces between a EA 2 and MII 2, said EA 2 being made insoluble by said MII 2, forming a water insoluble coating at said interface.

When all EA 2 are identical and all MII 2 are identical, five cases can be distinguished concerning the number of water insoluble coatings of said microcapsules:
- first case: when all the EA are identical and all the MII are identical, the number of insoluble coating is (m + n +1), or
- when the EA and the MII of said first and second layers (EA 1 and MII 1) are respectively different from the EA and the MII of said alternation of m+n layers (EA 2 and MII 2), and:
   ∘ when the first layer is MII 1 and second layer is EA 1, and MII 2 are not means to induce water insolubility of EA 1, the number of insoluble coating is (m + n) (second case), or
   ∘ when the first layer is EA 1 and the second layer is MII 1, and MII 1 are not means to induce water insolubility of EA 2, the number of insoluble coating is (m + n), (m + n) being in that case different from 1 (third case), or
   ∘ when the first layer is MII 1 and second layer is EA 1, and MII are means to induce water insolubility of EA 1, the number of insoluble coating is (m + n + 1) (fourth case), or
   ∘ when the first layer is EA 1 and the second layer is MII 1, and MII 1 are means to induce water insolubility of EA 2, the number of insoluble coating is (m + n +1) (fifth case).

Said microcapsules contain optionally a further coating consisting in or comprising a water insoluble compound.

When the first layer is MII 1 and the second layer is EA 1, and when m is equal to 1, then MII 2 are means to induce water insolubility of EA 1. In that case, the number of insoluble coatings is 2: the first one between MII 1 and EA 1, and the second one between EA1 and MII 2.

In all cases, the minimum number of insoluble coatings is 2: the first one between MII 1 and EA 1, and the second one between EA1 and MII 2, or between an EA2 and the corresponding means for inducing water insolubility (MII 2) of said EA2.

By microcapsule is meant a particle with a size from 1 µm to a 3 mm, comprising one or more coating isolating an encapsulated core from the external medium.

By core is meant the material surrounded by the first layer.

By coatings is meant the walls surrounding the core of said microcapsule.

By "water insoluble coatings" is meant the coatings of said microcapsule, the water solubility of which is low enough to prevent said active to be released from the microcapsule, when said microcapsule is placed in an aqueous-based alimentary, cosmetically or pharmaceutically acceptable medium.

The insolubilization of a microcapsule, and thus the fact that said coatings prevent said active to be released from said microcapsule is for example determined by the measurement of particle size in water, for instance with a laser particle sizer.

By "prevent said active to be released from the microcapsule" is meant that, when said microcapsule is placed in said medium, the concentration of active in the medium surrounding said microcapsule is below 5% in weight at 25°C, in particular below 1% in weight at 25°C.

By "oxidizable active" is meant an active that is capable of being oxidized.

By "active being oxidized" is meant a reducing agent oxidized by having its electrons taken away.

The tendency of an active of having its electrons taken away and thereby be oxidized is in particular measured by its redox potential, as known by those skilled in the art: an active is likely to be oxidized by an element of the external medium if the redox potential of said element is superior to the redox potential of said active.

By "encapsulation agent" is meant a water soluble or organic solvent-soluble agent forming a water insoluble coating after a modification of its chemical state.

By "water soluble or organic solvent-soluble EA" is meant an EA that is sufficiently soluble in water or in an organic solvent, in particular ethanol, to form a clear solution to the naked eye at a concentration of 5% in weight in respectively water or said organic solvent at 25°C.

In an advantageous embodiment, the present invention relates to a microcapsule wherein said EA is water soluble.

In an advantageous embodiment, the present invention relates to a microcapsule wherein said EA is organic solvent-soluble, in particular ethanol soluble.

Two cases can thus be distinguished regarding said water soluble or organic solvent-soluble agent:
- the first one corresponds to a water soluble agent forming said water insoluble coating after a modification of its chemical state;
- the second one corresponds to a water soluble and organic solvent, in particular ethanol, soluble agent forming said water insoluble coating after a modification of its chemical state.

The term "modification of its chemical state" means in particular a chemical reaction or a pH modification.

In an advantageous embodiment, the present invention relates to a microcapsule wherein said EA is an agent, the water solubility of which is pH-dependent.

By "an agent, the water solubility of which is pH-dependent" is meant that there is at least one pH value for which said agent is water soluble and at least one pH value for which said agent is water insoluble.

By "means for inducing water insolubility" is meant any means that modify the chemical state of said water soluble or organic solvent-soluble EA, providing a species that is water insoluble in standard reference conditions of temperature and pressure corresponding to a temperature of 25°C and a pressure of 100KPa.

By "water insoluble" is meant a species that is sufficiently insoluble in water to form a turbid solution to the naked eye at a concentration of 1 to 5% in weight in water at 25°C.

In an advantageous embodiment, the present invention relates to a microcapsule wherein said means for inducing water insolubility are an agent chemically reacting with said EA.

Said means react with said water soluble or organic solvent-soluble EA, providing a water insoluble species.

In an advantageous embodiment, the present invention relates to a microcapsule wherein said means for inducing water insolubility are an acid, a base, or a buffer.

Said acid, base, of buffer brings the pH from a value for which said EA is water soluble to a value for which said EA is water insoluble.

Said antioxidants X and Y are in particular selected independently from each other from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate.

In an advantageous embodiment, the present invention relates to a microcapsule, wherein the inner part of said core contains the oxidizable active (OA), said OA being in a liquid form, in particular in an oily form, or in a viscous oil form, or in a pasty form.

In a particularly advantageous embodiment, the present invention relates to a microcapsule, wherein said inner part of said core is a solid comprising the OA in a liquid form, in particular in an oily form, or in a viscous oil form, or in a pasty form.

In an advantageous embodiment, the present invention relates to a microcapsule consisting in or containing:
- a core consisting in or comprising an oxidizable active (OA), the outer part of said core being in a solid form,
   said core being optionally surrounded by a precoating consisting in or comprising an antioxidant compound X,
   said core, optionally surrounded by a precoating consisting in or comprising said antioxidant compound X, being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of an water soluble or organic solvent, in particular ethanol, soluble encapsulating agent (MII 1) when the first layer is said encapsulating agent,
   the first or the second layer from the core optionally comprising further an antioxidant compound Y,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   with the proviso that:
   when the first layer is MII 1 and the second layer is EA 1, and when m is equal to 1, then MII 2 are means to induce water insolubility of EA 1.

By "outer part" is meant the part of said core which is in contact with said first layer.

By "solid form" is meant a crystalline, semi-crystalline or amorphous state.

In an advantageous embodiment, the present invention relates to a microcapsule, wherein said core is under solid form.

In a particularly advantageous embodiment, the present invention relates to a microcapsule, wherein said core is crystalline. In this case, said oxidizable active is necessarily crystalline.

In another particularly advantageous embodiment, the present invention relates to a microcapsule, wherein said core is crystalline and solid, i.e. without any space or air cavities.

In another particularly advantageous embodiment, the present invention relates to a microcapsule, wherein said core is crystalline and contains at least one space or air cavity.

In another particularly advantageous embodiment, the present invention relates to a microcapsule, wherein said core is crystalline and has a water content less than 10%, in particular less than 6%, by weight.

In another particularly advantageous embodiment, the present invention relates to a microcapsule, wherein said core is under solid form and amorphous.

In another particularly advantageous embodiment, the present invention relates to a microcapsule, wherein said core is amorphous and contains at least one space or air cavity, said core being in particular obtained by spray drying.

In another particularly advantageous embodiment, the present invention relates to a microcapsule, wherein said core is amorphous and has a water content less than 10%, in particular less than 6%, by weight.

In an advantageous embodiment, the present invention relates to a microcapsule consisting in or containing:
- a core consisting in or comprising an oxidizable active (OA),
   said core being optionally surrounded by a precoating consisting in or comprising an antioxidant compound X,
   said core, optionally surrounded by a precoating consisting in or comprising said antioxidant compound X, being optionally surrounded by a coating consisting in or comprising a water insoluble compound,
- a first layer, which is free of proteins, surrounding the core by either:
   - a water soluble or organic solvent, in particular ethanol, soluble encapsulating agent (EA 1), or
   - means for inducing water insolubility of said encapsulating agent (MII 1),
- a second layer, which is free of proteins, surrounding the first layer by:
   - a water soluble or organic solvent, in particular ethanol, soluble encapsulating agent (EA 1) when the first layer is means for inducing water insolubility of said encapsulating agent,
   - means for inducing water insolubility of an water soluble or organic solvent, in particular ethanol, soluble encapsulating agent (MII 1) when the first layer is said encapsulating agent,
   the first or the second layer from the core optionally comprising further an antioxidant compound Y,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA), the outer part of said core being in a solid form,
   said core being optionally surrounded by a precoating consisting in or comprising an antioxidant compound X,
   said core, optionally surrounded by a precoating consisting in or comprising said antioxidant compound X, being optionally surrounded by a coating consisting in or comprising a water insoluble compound,
- a first layer, which is free of proteins, surrounding the core by either:
   - a water soluble or organic solvent, in particular ethanol, soluble encapsulating agent (EA 1), or
   - means for inducing water insolubility of said encapsulating agent (MII 1),
- a second layer, which is free of proteins, surrounding the first layer by:
   - a water soluble or organic solvent, in particular ethanol, soluble encapsulating agent (EA 1) when the first layer is means for inducing water insolubility of said encapsulating agent,
   - means for inducing water insolubility of an water soluble or organic solvent, in particular ethanol, soluble encapsulating agent (MII 1) when the first layer is said encapsulating agent,
   the first or the second layer from the core optionally comprising further an antioxidant compound Y,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being optionally surrounded by a precoating consisting in or comprising an antioxidant compound X,
   said core, optionally surrounded by a precoating consisting in or comprising said antioxidant compound X, being surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   the first or the second layer from the core optionally comprising further an antioxidant compound Y,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being optionally surrounded by a precoating consisting in or comprising an antioxidant compound X,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   the first or the second layer from the core optionally comprising further an antioxidant compound Y,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being surrounded by a precoating consisting in or comprising an antioxidant compound X,
   said core, surrounded by a precoating consisting in or comprising said antioxidant compound X, being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   the first or the second layer from the core optionally comprising further an antioxidant compound Y,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   the first or the second layer from the core optionally comprising further an antioxidant compound Y,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being optionally surrounded by a precoating consisting in or comprising an antioxidant compound X,
   said core, optionally surrounded by a precoating consisting in or comprising said antioxidant compound X, being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   the first or the second layer from the core comprising further an antioxidant compound Y,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being optionally surrounded by a precoating consisting in or comprising an antioxidant compound X,
   said core, optionally surrounded by a precoating consisting in or comprising said antioxidant compound X, being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being surrounded by a precoating consisting in or comprising an antioxidant compound X,
   said core, surrounded by a precoating consisting in or comprising said antioxidant compound X, being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   the first or the second layer from the core comprising further an antioxidant compound Y,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being optionally surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
   said core being surrounded by a precoating consisting in or comprising an antioxidant compound X,
   said core, surrounded by a precoating consisting in or comprising said antioxidant compound X, being surrounded by a coating consisting in or comprising a water insoluble compound,
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   the first or the second layer from the core comprising further an antioxidant compound Y,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule consisting in or containing:
- a core consisting in or comprising an oxidizable active (OA),
- a first layer surrounding the core by either:
   - a water soluble or organic solvent, in particular ethanol, soluble encapsulating agent (EA 1), or
   - means for inducing water insolubility of said encapsulating agent (MII 1),
- a second layer surrounding the first layer by:
   - a water soluble or organic solvent, in particular ethanol, soluble encapsulating agent (EA 1) when the first layer is means for inducing water insolubility of said encapsulating agent,
   - means for inducing water insolubility of a water soluble or organic solvent, in particular ethanol, soluble encapsulating agent (MII 1) when the first layer is said encapsulating agent,
   and
- an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
   m being equal to 1, 2, 3, 4, 5, 6, 7, 8, 9 or 10,
   n = m, when the first layer is said EA 1, or n = m - 1, when the first layer is said MII 1,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a microcapsule, said microcapsule being placed in an external medium that do not comprise said OA.

In an advantageous embodiment, the present invention relates to a microcapsule, said microcapsule being placed in an external medium that do not comprise vitamin C or a chemical derivative of vitamin C.

In an advantageous embodiment, the present invention relates to a microcapsule comprising less than 10%, in particular less than 6%, in weight of water.

In an advantageous embodiment, the present invention relates to a microcapsule wherein:
- said means for inducing water insolubility are an agent chemically reacting with said EA, or
- said means for inducing water insolubility are an acid, a base, or a buffer.

In an advantageous embodiment, the present invention relates to a microcapsule wherein said layers are such that, when said microcapsule is placed in an alimentary, cosmetically or pharmaceutically acceptable medium:
- said OA is not degraded by element(s) of said medium, and
- said element(s) of the medium is (are) not degraded by said OA.

By "OA not degraded by element(s)", it means that the OA is not oxidized or modified by oxidation, in presence of element(s) of said medium.

Said degradation can be measured by standard analytical method such as HPLC, for example HPLC ascorbic acid dosage when said OA is vitamin C.

By "element(s) of the medium is (are) not degraded by said OA", it means that the element(s) is (are) not directly degraded by said OA, or degraded by product(s) issued from oxidative reactions involving said OA.

The degradation of a given medium is measured according to criteria known by those skilled in the art.

For example, when said OA is ascorbic acid, a medium containing iron salts preferably under Fe²⁺ salt, would lead to the formation in the medium of iron ascorbate detectable with its specific black color.

In an advantageous embodiment, the present invention relates to a microcapsule wherein said layers are such that, when said microcapsule is placed in a fermented food composition, in particular in a fermented vegetal or dairy milk composition:
- said OA is not degraded by element(s) of said composition, and
- said element(s) of the composition is (are) not degraded by said OA,
provided said composition is not a fermented dairy food composition.

In an advantageous embodiment, the present invention relates to a microcapsule wherein said layers are such that, when said microcapsule is placed in an unfermented food composition, in particular in an unfermented dairy or an unfermented vegetal milk composition:
- said OA is not degraded by element(s) of said composition, and
- said element(s) of the composition is (are) not degraded by said OA.

In an advantageous embodiment, the present invention relates to a microcapsule wherein said layers are such that, when said microcapsule is placed in a alimentary, cosmetically or pharmaceutically acceptable medium comprising globular proteins, in particular a medium comprising or consisting in an unfermented dairy or vegetal milk composition and a medium comprising or consisting in a fermented dairy or vegetal milk compositions:
- said OA is not degraded by element(s) of said medium, and
- said element(s) of the medium is (are) not degraded by said OA.

In an advantageous embodiment, the present invention relates to a microcapsule wherein said layers are such that, when said microcapsule is placed in a alimentary, cosmetically or pharmaceutically acceptable medium comprising Ca²⁺ cations, in particular a medium comprising or consisting in an unfermented dairy vegetal milk composition and a medium comprising or consisting in a fermented dairy or vegetal milk compositions:
- said OA is not degraded by element(s) of said medium, and
- said element(s) of the medium is (are) not degraded by said OA.

In an advantageous embodiment, the present invention relates to a microcapsule wherein the mass of said OA is within the range from 40 to 99.5%, preferably from 60 to 98%, more preferably from 70 to 95%, of the total mass of said microcapsule.

In an advantageous embodiment, the present invention relates to a microcapsule wherein the mass of the first or second layer of EA 1 and of the n layers of EA 2 is within the range from 1 to 60%, preferably from 5 to 40%, more preferably from 10 to 20%, of the total mass of said microcapsule.

In an advantageous embodiment, the present invention relates to a microcapsule wherein the mass of the first or second layer of MII 1 and of the m layers of MII 2 is within the range from 0.1 to 5%, preferably from 0.2 to 3%, more preferably from 0.5 to 2.5%, of the total mass of said microcapsule.

In an advantageous embodiment, the present invention relates to a microcapsule wherein said microcapsule size is in range from 1 µm to 3 mm, preferably from 50 to 1000 µm, more preferably from 100 to 600 µm.

Non-limiting examples of size are the ranges from 100 µm to 300 µm for a microcapsule wherein m is equal to 1, from 300 µm to 500 µm for a microcapsule wherein m is equal to 2, and from 500 µm to 1000 µm for a microcapsule wherein m is equal to 3.

In an advantageous embodiment, the present invention relates to a microcapsule wherein said OA is in a crystalline state.

By "crystalline state" is meant a state wherein OA molecules are arranged in an orderly, repeating pattern.

Examples of OA in a crystalline state are commercially available crystallized vitamins, such as crystallized vitamin C.

In an advantageous embodiment, the present invention relates to a microcapsule wherein said OA is in a crystalline state, in particular a microcapsule wherein said core consists in or comprises an OA in a crystalline state and at least one additional element selected among drying agents, antioxidant agents, filmogen agents and emulsifying agents.

Drying agents are for example starch, maltodextrin, proteins in particular caseinates, gelatin, vegetable proteins in particular soya, wheat and pea proteins, gums in particular acacia gum as well known by those skilled in the art.

Examples of antioxidant agents are sodium ascorbate, ascorbyl palmitate, vitamin E, tocopherol acetate, superoxydismutase (SOD), polyphenols and mixtures thereof, in particular a mixture of ascorbyl palmitate and tocopherol acetate.

Filmogen agents are for example proteins in particular caseinate, gums, cellulose derivatives as well known by those skilled in the art.

Examples of emulsifying agents are lecithin, proteins, in particular pea proteins and caseinates, more particularly sodium caseinate, hydrolyzed proteins, modified starch, as well known by those skilled in the art.

In an advantageous embodiment, the present invention relates to a microcapsule wherein said OA is in an amorphous state.

By "amorphous state" is meant a state wherein OA molecules are not arranged in an orderly, repeating pattern.

Compounds in an amorphous state are for instance described in Hancock et al. Journal of Pharmaceutical Sciences 1997, 86(1), pages 1-12.

Examples of OA in an amorphous state are OA amorphous solids obtained by spray-drying, under condition known by those skilled in the art: spray drying is known to produce predominately amorphous material from a homogenous solution, due to the almost instantaneous transition between liquid and solid phases.

It is noted that a microcapsule of the invention, wherein said OA is optionally in a crystalline or an amorphous state, can let small molecules such as protons and water pass through its layers when said microcapsule is placed in water or in an aqueous medium.

In an advantageous embodiment, the present invention relates to a microcapsule wherein said OA is water soluble.

When water from an external medium consisting in water or an aqueous medium passes through said layers in an amount enough to dissolve said water soluble OA, a microcapsule wherein said core consists in or contains a aqueous solution of said OA and said water insoluble coating is obtained. Such a microcapsule allows a better bioavailability compared to particles where said OA is in a solid form, as said water soluble OA is already dissolved in water.

In an advantageous embodiment, the present invention relates to a microcapsule wherein said OA is in an amorphous state, in particular a microcapsule wherein said core consists in or comprises an OA in an amorphous state and at least one additional element selected among drying agents, antioxidant agents, filmogen agents and emulsifying agents.

In an advantageous embodiment, the present invention relates to a microcapsule wherein said core consists in or comprises an OA and water, the core being a solution, a liquid suspension or an emulsion of said OA in water.

In an advantageous embodiment, the present invention relates to a microcapsule wherein said core consists in or comprises an OA, water and at least one additional element selected among drying agents, antioxidant agents, filmogen agents and emulsifying agents, the core being a solution, a liquid suspension or an emulsion of said OA and said at least one additional elements in water.

In an advantageous embodiment, the present invention relates to a microcapsule wherein said water soluble EA are selected from alginates of monovalent cations, in particular Na⁺ alginates and K⁺ alginates,
in particular, wherein said EA are selected from alginates of monovalent cations, more particularly Na⁺ alginates and K⁺ alginates, and wherein said MII are a salt wherein the cation is a divalent metallic cation, more particularly Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

Alginates of monovalent cations are made water insoluble by stabilization, i.e. reticulation, mediated by divalent metallic cations.

In an advantageous embodiment, the present invention relates to a microcapsule wherein said EA are selected from alginates of monovalent cations, more particularly Na⁺ alginates and K⁺ alginates, and wherein said MII are a salt wherein the cation is a divalent metallic cation, more particularly Ca²⁺, Mg²⁺ or Cu²⁺, said salt being in particular CaCl₂, MgCl₂, calcium lactate, calcium gluconate, calcium citrate, calcium phosphate, calcium sulfate, calcium nitrate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

Alginates enable said OA not to be released in some external media but to be released from said microcapsules only into a specific medium, such as in the gastrointestinal tract, wherein release of said OA is desired, in a controlled manner.

In an advantageous embodiment, the present invention relates to a microcapsule wherein no divalent ion, in particular no Ca²⁺, is present in said core.

In an advantageous embodiment, the present invention relates to a microcapsule wherein said EA are lac gum,
in particular wherein said EA are lac gum, and wherein said MII are an acid, in particular ascorbic acid, citric acid, acetic acid or hydrochloric acid.

In an advantageous embodiment, the present invention relates to a microcapsule wherein said OA:
- is selected from the group comprising vitamin B5, vitamin B6, vitamin B8, vitamin B9, vitamin A, vitamin D3, vitamin K, vitamin E and vitamin C, in particular natural vitamin C, synthetic vitamin C, or salts of L-ascorbic acid, more particularly sodium L-ascorbate, calcium L-ascorbate and iron L-ascorbate, or
- comprises vitamin C, said OA being in particular a fruit juice comprising vitamin C, in particular orange juice, kiwi juice, cranberry juice, acerola juice or goji juice, said fruit juice being optionally concentrated or dried.

In an advantageous embodiment, the present invention relates to a microcapsule wherein said OA is or comprises vitamin C or vitamin A.

In an advantageous embodiment, the present invention relates to a microcapsule wherein said OA is selected from the group comprising dihydroxyacetone (DHA), enriched in omega 3 or omega 6 oil, and oxidizable enzymes, in particular superoxydismutase (SOD), said OA being in particular SOD, more particularly freeze-dried SOD or spray-dried SOD.

In an advantageous embodiment, the present invention relates to a microcapsule wherein said OA is a salt constituted by an inorganic or organic anion and a transition metal cation of oxidation state +2, said salt being in particular selected from the group comprising iron (II) sulfate, manganese (II) sulfate, chrome (II) sulfate, iron (II) oxalate, manganese (II) oxalate, chrome (II) oxalate, iron (II) acetate, manganese (II) acetate and chrome (II) acetate.

In an advantageous embodiment, the present invention relates to a microcapsule comprising at least one antioxidant, said antioxidant:
- being comprised in said core, or
- being, or being comprised in, said coating surrounding said core, or
- being comprised in said first or second layer.

In an advantageous embodiment, the present invention relates to a microcapsule wherein said antioxidant is selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate.

In an advantageous embodiment, the present invention relates to a microcapsule wherein said core is surrounded by a precoating consisting in or comprising an antioxidant compound X selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said antioxidant being in particular SOD.

In an advantageous embodiment, the present invention relates to a microcapsule wherein said first or the second layer from the core comprises further an antioxidant compound Y selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said antioxidant being in particular a mixture of ascorbyl palmitate and tocopherol acetate.

In an advantageous embodiment, the present invention relates to a microcapsule wherein said core is surrounded by a precoating consisting in or comprising a first antioxidant compound X selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said first antioxidant X being in particular SOD,
and wherein said first or the second layer from the core comprises further a second antioxidant compound Y selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said second antioxidant Y being in particular a mixture of ascorbyl palmitate and tocopherol acetate.

In an advantageous embodiment, the present invention relates to a microcapsule wherein said OA is vitamin C or comprises vitamin C and wherein said EA are selected from alginates of monovalent cations, in particular Na⁺ alginates and K⁺ alginates,
in particular a microcapsule wherein said OA is vitamin C or comprises vitamin C, wherein said EA are selected from alginates of monovalent cations, in particular Na⁺ alginates and K⁺ alginates, and wherein said MII are a salt wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein said OA is vitamin A or comprises vitamin A and wherein said EA are selected from alginates of monovalent cations, in particular Na⁺ alginates and K⁺ alginates,
in particular a microcapsule wherein said OA is vitamin A or comprises vitamin A, wherein said EA are selected from alginates of monovalent cations, in particular Na⁺ alginates and K⁺ alginates, and wherein said MII are a salt wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein said OA is SOD and wherein said EA are lac gum,
in particular a microcapsule wherein said OA is SOD, wherein said EA are lac gum, and wherein said MII are an acid, in particular ascorbic acid, citric acid, acetic acid or hydrochloric acid.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA 1, and
- a third layer of MII 2,
MII 2 being means to induce water insolubility of EA 1.

In that case, a first insoluble coating is formed between MII 1 and EA 1, and a second insoluble coating is formed between EA 1 and MII 2.

In an advantageous embodiment, the present invention relates to a microcapsule wherein the first layer is EA 1 and wherein m is equal to 1, corresponding to a microcapsule comprising:
- a core,
- a first layer of EA 1,
- a second layer of MII 1,
- a third layer of EA 2, and
- a fourth layer of MII 2.

In that case, at least two insoluble coatings are formed: an insoluble coating is formed between MII 1 and EA 1, and a second insoluble coating is formed between EA 2 and MII 2.

In an advantageous embodiment, the present invention relates to a microcapsule wherein the first layer is MII 1 and wherein m is equal to 2, corresponding to a microcapsule comprising:
- a core,
- a first layer of MII 1,
- a second layer of EA 1,
- a third layer of MII 2,
- a fourth layer of EA 2, and
- a fifth layer of MII 2.

In that case, at least two insoluble coatings are formed: an insoluble coating is formed between MII 1 and EA 1, and a second insoluble coating is formed between EA 2 and some MII 2.

In an advantageous embodiment, the present invention relates to a microcapsule wherein the first layer is EA 1 and wherein m is equal to 2, corresponding to a microcapsule comprising:
- a core,
- a first layer of EA 1,
- a second layer of MII 1,
- a third layer of EA 2,
- a fourth layer of MII 2,
- a fifth layer of EA 2, and
- a sixth layer of MII 2,

In that case, at least three insoluble coatings are formed: an insoluble coating is formed between MII 1 and EA 1, and two insoluble coatings are formed between EA 2 and some MII 2.

In an advantageous embodiment, the present invention relates to a microcapsule wherein the first layer is MII 1 and wherein m is equal to 3, corresponding to a microcapsule comprising:
- a core,
- a first layer of MII 1,
- a second layer of EA 1,
- a third layer of MII 2,
- a fourth layer of EA 2,
- a fifth layer of MII 2,
- a sixth layer of EA 2,
- a seventh layer of MII 2.

In that case, at least three insoluble coatings are formed: an insoluble coating is formed between MII 1 and EA 1, and two insoluble coatings are formed from the two EA 2.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA 1, and
- a third layer of MII 2,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is EA 1 and wherein m is equal to 1, corresponding to a microcapsule comprising:
- a core,
- a first layer of EA 1,
- a second layer of MII 1,
- a third layer of EA 2, and
- a fourth layer of MII 2,
and wherein said EA 1 and EA 2 are Lac gum, said MII 1 and MII 2 are an acid, in particular ascorbic acid, citric acid, acetic acid or hydrochloric acid.

In that case, three insoluble coatings are formed.

In an advantageous embodiment, the present invention relates to a microcapsule wherein the first layer is EA 1 and wherein m is equal to 1, corresponding to a microcapsule comprising:
- a core,
- a coating consisting in or comprising a water insoluble compound, in particular ethylcellulose,
- a first layer of EA 1,
- a second layer of MII 1,
- a third layer of EA 2, and
- a fourth layer of MII 2,
and wherein said EA 1 and EA 2 are Lac gum, said MII 1 and MII 2 are an acid, in particular ascorbic acid, citric acid, acetic acid or hydrochloric acid.

In that case, the microcapsule comprises four insoluble coatings.

In an advantageous embodiment, the present invention relates to a microcapsule wherein the first layer is EA 1 and wherein m is equal to 1, corresponding to a microcapsule comprising:
- a core,
- a first layer of EA 1,
- a second layer of MII 1,
- a third layer of EA 2, and
- a fourth layer of MII 2,
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In that case, three insoluble coatings are formed.

In an advantageous embodiment, the present invention relates to a microcapsule wherein the first layer is MII 1 and wherein m is equal to 2, corresponding to a microcapsule comprising:
- a core,
- a first layer of MII 1,
- a second layer of EA 1,
- a third layer of MII 2,
- a fourth layer of EA 2, and
- a fifth layer of MII 2,
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In that case, four insoluble coatings are formed.

In an advantageous embodiment, the present invention relates to a microcapsule wherein the first layer is EA 1 and wherein m is equal to 1, corresponding to a microcapsule comprising:
- a core,
- a first layer of EA 1,
- a second layer of MII 1,
- a third layer of EA 2,
- a fourth layer of MII 2,
- a fifth layer of EA 2, and
- a sixth layer of MII 2,
and wherein said EA 1 and EA 2 are Lac gum, said MII 1 and MII 2 are an acid, in particular ascorbic acid, citric acid, acetic acid or hydrochloric acid.

In that case, five insoluble coatings are formed.

In an advantageous embodiment, the present invention relates to a microcapsule wherein the first layer is MII 1 and wherein m is equal to 3, corresponding to a microcapsule comprising:
- a core,
- a first layer of MII 1,
- a second layer of EA 1,
- a third layer of MII 2,
- a fourth layer of EA 2,
- a fifth layer of MII 2,
- a sixth layer of EA 2,
- a seventh layer of MII 2.
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In that case, six insoluble coatings are formed.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA 1, and
- a third layer of MII 2,
wherein said OA is vitamin C or comprises vitamin C,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA 1, and
- a third layer of MII 2,
wherein said OA is vitamin A or comprises vitamin A,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is EA 1 and wherein m is equal to 1, corresponding to a microcapsule comprising:
- a core,
- a first layer of EA 1,
- a second layer of MII 1,
- a third layer of EA 2, and
- a fourth layer of MII 2,
wherein said OA is vitamin C or comprises vitamin C,
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is EA 1 and wherein m is equal to 1, corresponding to a microcapsule comprising:
- a core,
- a first layer of EA 1,
- a second layer of MII 1,
- a third layer of EA 2, and
- a fourth layer of MII 2,
wherein said OA is vitamin A or comprises vitamin A,
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is MII 1 and wherein m is equal to 2, corresponding to a microcapsule comprising:
- a core,
- a first layer of MII 1,
- a second layer of EA 1,
- a third layer of MII 2,
- a fourth layer of EA 2, and
- a fifth layer of MII 2,
wherein said OA is vitamin C or comprises vitamin C,
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is MII 1 and wherein m is equal to 2, corresponding to a microcapsule comprising:
- a core,
- a first layer of MII 1,
- a second layer of EA 1,
- a third layer of MII 2,
- a fourth layer of EA 2, and
- a fifth layer of MII 2,
wherein said OA is vitamin A or comprises vitamin A,
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is MII 1 and wherein m is equal to 3, corresponding to a microcapsule comprising:
- a core,
- a first layer of MII 1,
- a second layer of EA 1,
- a third layer of MII 2,
- a fourth layer of EA 2,
- a fifth layer of MII 2,
- a sixth layer of EA 2,
- a seventh layer of MII 2,
wherein said OA is vitamin C or comprises vitamin C,
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is MII 1 and wherein m is equal to 3, corresponding to a microcapsule comprising:
- a core,
- a first layer of MII 1,
- a second layer of EA 1,
- a third layer of MII 2,
- a fourth layer of EA 2,
- a fifth layer of MII 2,
- a sixth layer of EA 2,
- a seventh layer of MII 2,
wherein said OA is vitamin A or comprises vitamin A,
and wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA 1, and
- a third layer of MII 2,
wherein said OA is vitamin C or comprises vitamin C,
wherein said core is surrounded by a precoating consisting in or comprising SOD,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA 1, and
- a third layer of MII 2,
wherein said OA is vitamin A or comprises vitamin A,
wherein said core is surrounded by a precoating consisting in or comprising SOD,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA 1, and
- a third layer of MII 2,
wherein said OA is vitamin C or comprises vitamin C,
wherein said first or the second layer from the core comprises further a mixture of ascorbyl palmitate and tocopherol acetate,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA 1, and
- a third layer of MII 2,
wherein said OA is vitamin A or comprises vitamin A,
wherein said first or the second layer from the core comprises further a mixture of ascorbyl palmitate and tocopherol acetate,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA1, and
- a third layer of MII 2,
wherein said OA is vitamin C or comprises vitamin C,
wherein said core is surrounded by a precoating consisting in or comprising SOD,
wherein said first or the second layer from the core comprises further a mixture of ascorbyl palmitate and tocopherol acetate,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In an advantageous embodiment, the present invention relates to a microcapsule wherein the first layer is MII 1 and wherein m is equal to 1, corresponding to a microcapsule comprising:
- a core,
- a first layer of MII 1,
- a second layer of EA1, and
- a third layer of MII 2,
wherein said OA is vitamin A or comprises vitamin A,
wherein said core is surrounded by a precoating consisting in or comprising SOD,
wherein said first or the second layer from the core comprises further a mixture of ascorbyl palmitate and tocopherol acetate,
and wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, calcium phosphate, calcium sulfate, magnesium lactate, magnesium gluconate, magnesium citrate, magnesium phosphate, magnesium sulfate, magnesium nitrate, CuCl₂, copper sulfate, copper sulfate pentahydrate, copper nitrate, copper nitrate hexahydrate or copper phosphate.

In another aspect, the present invention relates to a process of preparation of microcapsules described above, comprising:
(a) a step of spraying a mixture of a water soluble or organic solvent, in particular ethanol, soluble encapsulating agent (EA 1), or of means for inducing water insolubility of said encapsulating agent (MII 1), on a core consisting in or comprising an oxidizable active (OA), said core being optionally surrounded by a precoating consisting in or comprising an antioxidant compound, said core, optionally surrounded by a precoating consisting in or comprising said antioxidant compound X, being optionally surrounded by a coating consisting in or comprising a water insoluble compound,
   to obtain particles comprising a core surrounded by a first layer,
(b) a step of spraying a mixture of a water soluble or organic solvent, in particular ethanol, soluble encapsulating agent (EA 1) when the first layer is means for inducing water insolubility of said EA, or of means for inducing water insolubility of an water soluble or organic solvent, in particular ethanol, soluble EA (MII 2) when the first layer is said EA 1, on particles obtained in step (a), to obtain particles comprising a core surrounded by a first and a second layer,
(c) (m+n) steps of spraying in alternation n times mixtures of water soluble or organic solvent, in particular ethanol, soluble encapsulating agents (EA 2) and water, and m times mixtures of means for inducing water insolubility of said encapsulating agents (MII 2) and water, starting with the spraying of a mixture of the same nature as the nature of the step (a) spraying, on particles obtained in step (b), to obtain said microcapsules,
   m and n being as defined above,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

By "starting with the spraying of the same nature as the nature of the step (a) spraying", is meant that:
- said alternation of (m + n) sprayings starts with the spraying of a mixture of a water soluble or organic solvent, in particular ethanol, soluble encapsulating agent (EA 2) and water, when the step (a) spraying is the spraying of a mixture of a water soluble or organic solvent, in particular ethanol, soluble encapsulating agent (EA 1);
- said alternation of (m + n) sprayings starts with the spraying of a mixture of a water soluble or organic solvent, in particular ethanol, soluble encapsulating agent (MII 2) and water, when the step (a) spraying is the spraying of a mixture of a water soluble or organic solvent, in particular ethanol, soluble encapsulating agent (MII 1).

It is noted that said OA is, in said obtained microcapsule, predominantly in an amorphous state as spray drying is known to produce predominantly amorphous material from a homogenous solution, due to the almost instantaneous transition between liquid and solid phases.

In an advantageous embodiment, the present invention relates to a process of preparation of microcapsules described above, wherein said core is surrounded by a precoating consisting in or comprising an antioxidant compound and is obtained by spraying a mixture of said antioxidant compound on a core consisting in or comprising an oxidizable active (OA).

In an advantageous embodiment, the present invention relates to a process of preparation of microcapsules described above, wherein said core is surrounded by a coating consisting in or comprising a water insoluble compound, said core being obtained by spraying an organic solvent solution of a water insoluble compound on a core consisting in or comprising an oxidizable active (OA).

In an advantageous embodiment, the present invention relates to a process of preparation of microcapsules described above, wherein said core is surrounded by a precoating consisting in or comprising an antioxidant compound, said core, surrounded by a precoating consisting in or comprising said antioxidant compound X, being further surrounded by a coating consisting in or comprising a water insoluble compound,
said core being obtained by:
(i) spraying a mixture of said antioxidant compound on a core consisting in or comprising an oxidizable active (OA);
(ii) spraying an organic solvent solution of a water insoluble compound on the particles obtained in previous step.

In an advantageous embodiment, the present invention relates to a process of preparation of microcapsules described above, comprising, after said spraying steps, a step of drying said microcapsules to obtain dried microcapsules.

In an advantageous embodiment, the present invention relates to a process wherein said spraying steps and drying step are done in a coating device by spray, in particular a coating device by spray comprising a fluidized bed.

Examples of coating device by spray wherein the spraying step can be performed are fluidized beds, top spray, tangential spray, bottom spray or wurster devices, batch process devices or continuous devices as horizontal fluid bed or multicellular fluid bed; these devices being as described in Vandamme et al Microencapsulation; Tec & Doc; 2007; Chapter 10.

In an advantageous embodiment, the present invention relates to a process of preparation of microcapsules described above, wherein said spraying steps and drying step are done in a spray-dryer.

Examples of spray-dryer wherein the spraying steps and the drying step can be performed are single effect spray-drying towers, toll form spray-drying towers, belt dryer and multiple effect spray-drying towers with internal or external fluid bed.

In an advantageous embodiment, the present invention relates to a process of preparation of microcapsules described above, wherein said core consisting in or comprising an oxidizable active (OA) is obtained by spray-drying.

In an advantageous embodiment, the present invention relates to a process of preparation of microcapsules described above, wherein said spray-drying step, spraying steps and drying step are done in the same spray-dryer.

Examples of spray-dryer wherein the spray-drying step , the spraying steps and the drying step can be performed are single effect spray-drying towers, toll form spray-drying towers, belt dryer and multiple effect spray-drying towers with internal or external fluid bed.

In an advantageous embodiment, the present invention relates to a process wherein said spray-drying step is done in a spray-dryer and said spraying steps and drying step are done in a coating device by spray, in particular a coating device by spray comprising a fluidized bed.

Examples of spray-dryer wherein the spray-drying step can be performed are single effect spray-drying towers, toll form spray-drying towers, belt dryer and multiple effect spray-drying towers with internal or external fluid bed.

The spray-drying step can also be performed in a closed cycle spray dryer. In particular, the spray-drying step is performed in an inert gas atmosphere, in particular nitrogen, where said inert gas recycles within said spray dryer.

In a closed cycle spray dryer, volatile compounds, for example organic solvents, are in particular condensed by cooling down the exhaust gas. The cleaned inert gas is then re-heated to the drying temperature, said drying temperature being in particular comprised from 100°C to 150°C, and re-used in the process.

Examples of device wherein the spraying steps and the drying step can be performed are fluidized beds, top spray, tangential spray, bottom spray or wurster devices, batch process devices or continuous devices as horizontal fluid bed or multicellular fluid bed; these devices being as described in Vandamme et al Microencapsulation; Tec & Doc; 2007; Chapter 10.

In an advantageous embodiment, the present invention relates to a process of preparation of microcapsules described above, wherein said core consisting in or comprising an oxidizable active (OA) is obtained by spray-drying in a spray-dryer,
said spray-dryer being a closed cycle spray dryer, under inert gas atmosphere, in particular nitrogen, where said inert gas recycles within said spray dryer.

In an advantageous embodiment, the present invention relates to a process comprising, after said spraying steps, a step of drying said microcapsules to obtain dried microcapsules,
said spraying steps and drying step are done in the same spray-dryer,
said spray-dryer being a closed cycle spray dryer, under inert gas atmosphere, in particular nitrogen, where said inert gas recycles within said spray dryer.

In an advantageous embodiment, the present invention relates to a process of preparation of microcapsules described above, wherein said core consisting in or comprising an oxidizable active (OA) is obtained by spray-drying,
said process comprising, after said spraying steps, a step of drying said microcapsules to obtain dried microcapsules,
said spray-drying step, spraying steps and drying step are done in the same spray-dryer,
said spray-dryer being a closed cycle spray dryer, under inert gas atmosphere, in particular nitrogen, where said inert gas recycles within said spray dryer.

In an advantageous embodiment, the present invention relates to a process of preparation of microcapsules described above, comprising:
(a) a step of spraying a mixture of a water soluble or organic solvent encapsulating agent (EA 1), or of means for inducing water insolubility of said encapsulating agent (MII 1), on a core consisting in or comprising an oxidizable active (OA),
   to obtain particles comprising a core surrounded by a first layer,
(b) a step of spraying a mixture of a water soluble or organic solvent, in particular ethanol, soluble encapsulating agent (EA 1) when the first layer is means for inducing water insolubility of said EA, or of means for inducing water insolubility of an water soluble or organic solvent, in particular ethanol, soluble EA (MII 2) when the first layer is said EA 1, on particles obtained in step (a), to obtain particles comprising a core surrounded by a first and a second layer,
(c) (m+n) steps of spraying in alternation n times mixtures of water soluble or organic solvent, in particular ethanol, soluble encapsulating agents (EA 2) and water, and m times mixtures of means for inducing water insolubility of said encapsulating agents (MII 2) and water, starting with the spraying of a mixture of the same nature as the nature of the step (a) spraying, on particles obtained in step (b), to obtain said microcapsules,
   m and n being as defined above,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

In an advantageous embodiment, the present invention relates to a process of preparation of microcapsules described above, comprising:
(a) a step of cospraying:
   - a liquid mixture A consisting in or comprising:
      o a mixture of a water soluble or organic solvent, in particular ethanol, soluble encapsulating agent (EA 1), or of means for inducing water insolubility of said encapsulating agent (MII 1),
      o an oxidizable active (OA),
      ∘ optionally at least one additional element selected among drying agents, antioxidant agents, filmogen agents and emulsifying agents,
      and
   - a mixture B of a water soluble or organic solvent, in particular ethanol, soluble encapsulating agent (EA 1) when said liquid mixture A consists in or comprises means for inducing water insolubility of said EA, or of means for inducing water insolubility of an water soluble or organic solvent, in particular ethanol, soluble EA (MII 2) when said liquid mixture A consists in or comprises said EA 1,
   to obtain particles comprising a core surrounded by a first and a second layer,
(c) (m+n) steps of spraying in alternation n times mixtures of water soluble or organic solvent, in particular ethanol, soluble encapsulating agents (EA 2) and water, and m times mixtures of means for inducing water insolubility of said encapsulating agents (MII 2) and water, starting with the spraying of a mixture of the same nature as the nature of the step (a) spraying, on particles obtained in step (b), to obtain said microcapsules,
   m and n being as defined above,
   the last layer being MII 2,
   each EA 2 being preceded and/or followed by means for inducing water insolubility (MII 2) of said EA2,
   with the proviso that:
   when the first layer is MII 1 and the second layer is EA 1, and when m is equal to 1, then MII 2 are means to induce water insolubility of EA 1.

By co-spraying is meant that said liquid mixture A and said mixture B are sprayed jointly.

In an advantageous embodiment, co-spraying is performed with two separate means of pulverization, in particular two separate nozzles.

In an advantageous embodiment, co-spraying is performed with two combined means of pulverization, in particular a trifluid nozzle.

In an advantageous embodiment, the present invention relates to a process wherein said means for inducing water insolubility are an agent chemically reacting with said EA.

In an advantageous embodiment, the present invention relates to a process wherein said means for inducing water insolubility are an acid, a base, or a buffer.

Interestingly, the Inventors have found that the fact of inducing water insolubility of EA by spraying said means, in particular in aqueous solution, on solid dried particles (comprising said OA and said EA) obtained by spray-drying, surprisingly forms protective coatings that have the ability to protect said OA from oxidation by a given alimentary, cosmetically or pharmaceutically acceptable medium in which said microcapsules are placed, and said medium from said OA.

In an advantageous embodiment, the present invention relates to a process wherein said liquid mixture is a homogenous aqueous solution.

The liquid mixture is a homogenous aqueous solution when said OA, said EA and, provided an additional element is present in said mixture, said additional element are water soluble.

When the liquid mixture is a homogenous aqueous solution, the size of the obtained microcapsules are driven by the parameters of spray-drying, and not by the characteristics of said water soluble OA.

In an advantageous embodiment, the present invention relates to a process wherein said liquid mixture is a solid-in-liquid suspension or an emulsion.

In an advantageous embodiment, the present invention relates to a process wherein said liquid mixture is a homogenous aqueous solution consisting in or comprising said OA.

In an advantageous embodiment, the present invention relates to a process wherein said liquid mixture is a homogenous aqueous solution consisting in or comprising said OA and at least one additional element selected among drying agents, antioxidant agents, filmogen agents and emulsifying agents.

In an advantageous embodiment, the present invention relates to a process wherein said liquid mixture is a homogenous aqueous solution consisting in or comprising said OA and said water soluble or organic solvent, in particular ethanol, soluble EA.

In an advantageous embodiment, the present invention relates to a process wherein said liquid mixture is a homogenous aqueous solution consisting in or comprising said OA, said water soluble or organic solvent, in particular ethanol, soluble EA, and at least one additional element selected among drying agents, antioxidant agents, filmogen agents and emulsifying agents.

In another aspect, the present invention relates to the use of microcapsules described above for the preparation of a food or beverage composition described below.

In another aspect, the present invention relates to a food composition comprising microcapsules described above.

In another aspect, the present invention relates to a beverage composition comprising microcapsules described above.

In an advantageous embodiment, the present invention relates to a food or beverage composition comprising fermented dairy products, in particular yogurts, more particularly yogurts containing probiotics.

In an advantageous embodiment, the present invention relates to a food or beverage composition comprising unfermented dairy products.

In an advantageous embodiment, the present invention relates to a food or beverage composition comprising an animal or vegetal milk, in particular almond milk, coconut milk, rice milk and soy milk, said composition being unfermented or fermented.

In an advantageous embodiment, the present invention relates to a food or beverage composition comprising one or more fruits in addition of said microcapsules.

In an advantageous embodiment, the present invention relates to a food or beverage composition wherein said food or beverage composition is a fruit juice composition.

In an advantageous embodiment, the present invention relates to a food or beverage composition comprising one or more vegetables in addition of said microcapsules.

In an advantageous embodiment, the present invention relates to a food or beverage composition comprising:
- said microcapsules,
- water,
- one or more sugar and/or sweetener
- flavoring(s).

In an advantageous embodiment, the present invention relates to a beverage composition comprising:
- said microcapsules, wherein said OA is in particular SOD,
- water,
- optionally a fruit juice,
- optionally at least one vitamin, in particular vitamin C or riboflavin.

In an advantageous embodiment, the present invention relates to a pulverulent composition for the preparation of an instant drink comprising:
- said microcapsules, wherein said OA is in particular SOD,
- optionally at least one vitamin, in particular vitamin C or riboflavin,
said pulverulent composition to be mixed with water and/or at least a fruit juice before use.

In another aspect, the present invention relates to a cosmetic composition comprising microcapsules described above.

In another aspect, the present invention relates to a pharmaceutical composition comprising microcapsules described above.

In another aspect, the present invention relates to the use of microcapsules described above for the preparation of a food or beverage composition.

In another aspect, the present invention relates to the use of microcapsules described above for the preparation of a cosmetic composition.

In another aspect, the present invention relates to the use of microcapsules described above for the preparation of a pharmaceutical composition.

### DESCRIPTION OF THE FIGURES

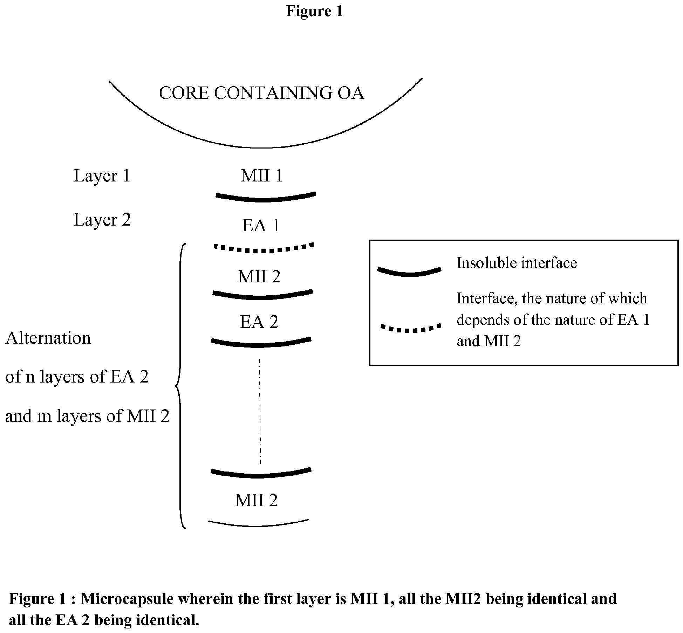

Figure 1 illustrates a microcapsule wherein the first layer is MII 1, all the MII2 being identical and all the EA 2 being identical.

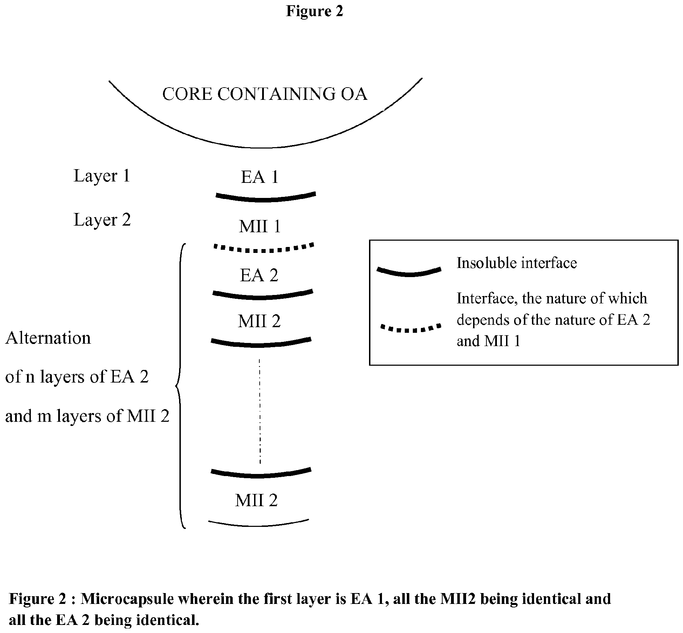

Figure 2 illustrates a microcapsule wherein the first layer is EA 1, all the MII2 being identical and all the EA 2 being identical.

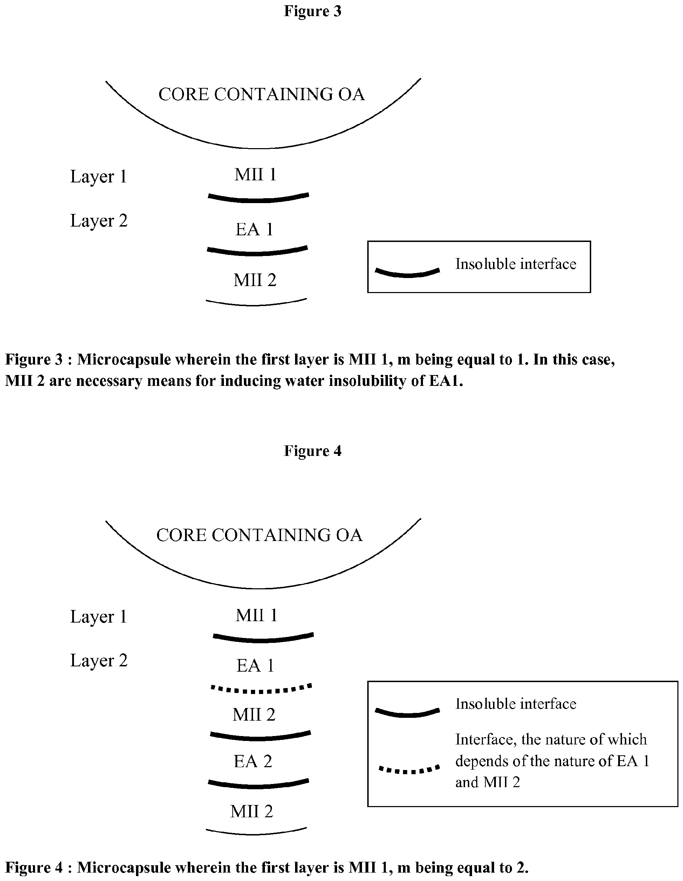

Figure 3 illustrates a microcapsule wherein the first layer is MII 1, m being equal to 1. In this case, MII 2 are necessary means for inducing water insolubility of EA1.
Figure 4 illustrates a microcapsule wherein the first layer is MII 1, m being equal to 2.

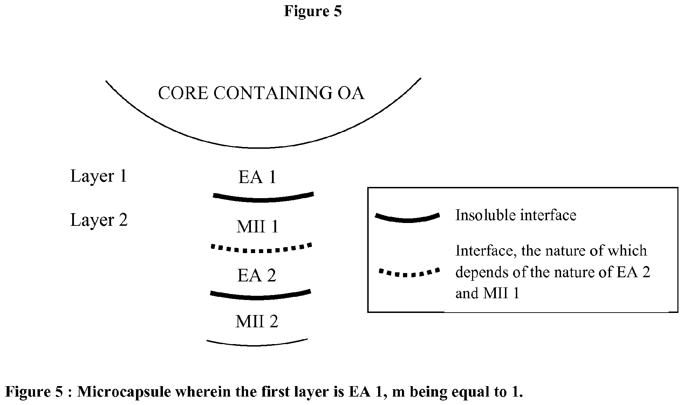

Figure 5 illustrates a microcapsule wherein the first layer is EA 1, m being equal to 1.

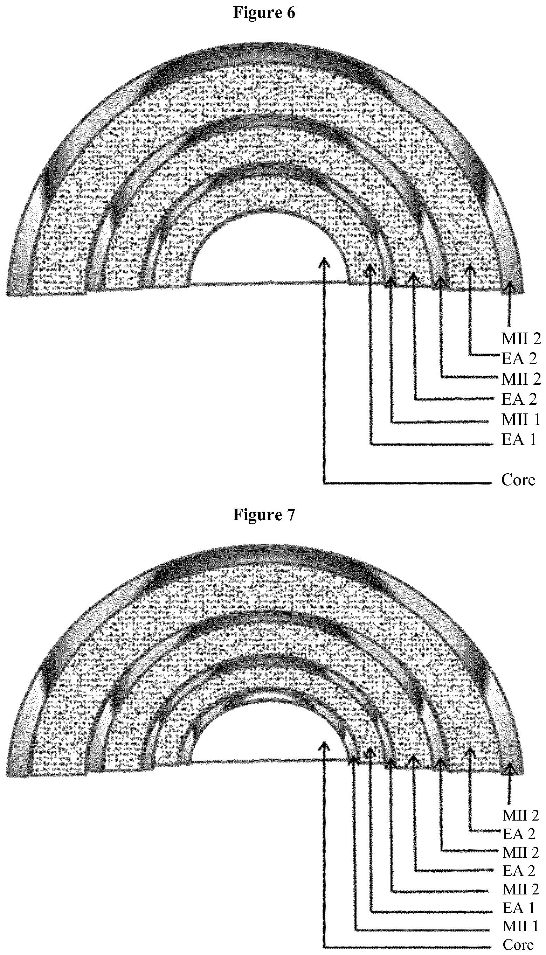

Figure 6 illustrates a microcapsule wherein the first layer is EA 1 and m is equal to 2, all the MII2 being identical to MII 1 and all the EA 2 being identical to EA 1.
Figure 7 illustrates a microcapsule wherein the first layer is MII 1 and m is equal to 3, all the MII2 being identical to MII 1 and all the EA 2 being identical to EA 1.

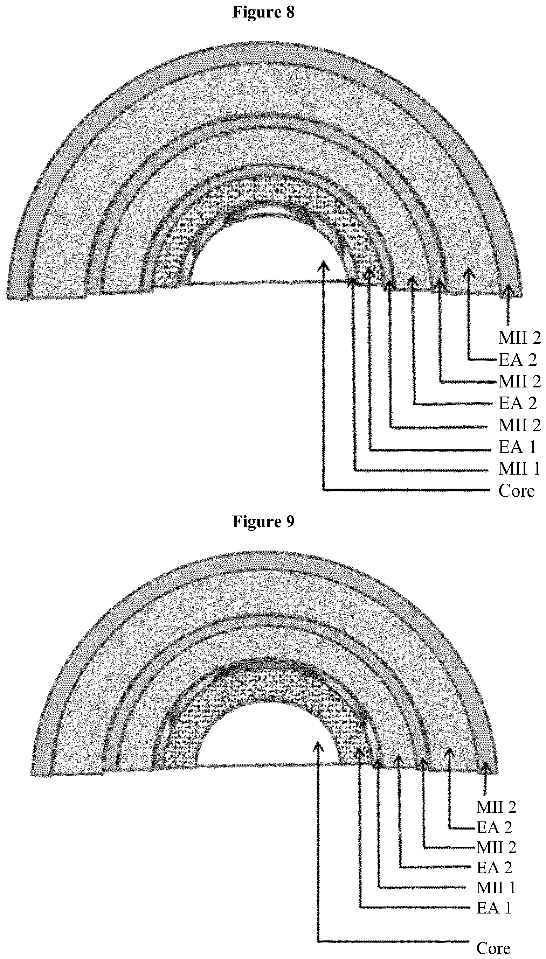

Figure 8 illustrates a microcapsule wherein the first layer is MII 1 and m is equal to 3, all the MII2 being identical and all the EA 2 being identical, the MII 2 being different from MII 1 and the EA 2 being different from EA 1.
Figure 9 illustrates a microcapsule wherein the first layer is EA 1 and m is equal to 2, all the MII2 being identical and all the EA 2 being identical, the MII 2 being different from MII 1 and the EA 2 being different from EA 1.

The present invention is further illustrated by the following examples.

### EXAMPLES

### Example 1: Microcapsules containing vitamin C (3 layers)

1.2 kg of crystalline vitamin C were fluidized in a fluid bed (GPCG1 GLATT), inlet air temperature is 70°C.

290 g of a 5 % aqueous solution of calcium chloride in dry matter, were sprayed on the fluidized particles with a bifluid nozzle (spraying system SS 2050), on a top-spray position, as well known by those skilled in the art (in particular Vandamme et al Microencapsulation; Tec & Doc; 2007), and then dried.

Then, 1.65 kg of a 5 % aqueous solution of sodium alginate in dry matter, containing 3 g of ascorbyl palmitate were sprayed on the fluidized particles with a bifluid nozzle (spraying system SS 2050), on a top-spray position, and then dried. Solid particles are obtained.

Another 480 g of a 5% aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1% (infrared measurement). Particle size distribution was below 300 µm (mean particle size measured by light diffraction on Malvern sizer) and bulk density was of 850 g/l.

### Example 2: Microcapsules containing vitamin C (5 layers)

1.0 kg of crystalline vitamin C were fluidized in a fluid bed (GPCG1 GLATT), inlet air temperature is 70°C.

690 g of a 5 % aqueous solution of calcium chloride in dry matter, were sprayed on the fluidized particles with a bifluid nozzle (schlick 1.2 mm), on a bottom-spray position, as well known by those skilled in the art (in particular Vandamme et al Microencapsulation; Tec & Doc; 2007), and then dried.

Then, 1.97 kg of a 7 % aqueous solution of sodium alginate in dry matter, containing 2.76 g of ascorbyl palmitate were sprayed on the fluidized particles with a bifluid nozzle (schlick 1.2mm) on a bottom-spray position, and then dried. Solid particles are obtained.

Another 650 g of a 5 % aqueous solution of calcium chloride in dry matter was then spray dried on the fluidized particles
Then, another 1.97 kg of a 5 % aqueous solution of sodium alginate in dry matter, were sprayed on the fluidized particles with a bifluid nozzle (spraying system SS 2050), on a top-spray position, and then dried.

Finally, another 650 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1% (infrared measurement). Particle size distribution was below 500 µm (mean particle size measured by light diffraction on Malvern sizer) and bulk density was of 750 g/l.

### Example 3 : Microcapsules containing vitamin C and SOD

1.2 kg of crystalline vitamin C were fluidized in a fluid bed (GPCG1 GLATT), inlet air temperature is 70°C.

325 g of a 10% aqueous solution of SOD in dry matter, were sprayed on the fluidized particles with a bifluid nozzle (spraying system SS 2050), on a top-spray position, as well known by those skilled in the art (in particular Vandamme et al Microencapsulation; Tec & Doc; 2007), and then dried.

360 g of a 5 % aqueous solution of calcium chloride in dry matter, were sprayed on the fluidized particles with a bifluid nozzle (spraying system SS 2050), on a top-spray position, Then, 3.2 kg of a 5 % aqueous solution of sodium alginate in dry matter, containing 3.5 g of ascorbyl palmitate were sprayed on the fluidized particles with a bifluid nozzle (spraying system SS 2050), on a top-spray position, and then dried. Solid particles are obtained.

Another 650 g of a 5 % aqueous solution of calcium chloride in dry matter was then spray dried on the fluidized particles

Then, another 3.0 kg of a 5 % aqueous solution of sodium alginate in dry matter, were sprayed on the fluidized particles with a bifluid nozzle (spraying system SS 2050), on a top-spray position, and then dried.

Finally, another 650 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1% (infrared measurement). Particle size distribution was below 500 µm (mean particle size measured by light diffraction on Malvern sizer) and bulk density was of 750 g/l.

### Example 4: Microcapsules containing vitamin C and Phytrox (3 layers)

1.2 kg of crystalline vitamin C were fluidized in a fluid bed (GPCG1 GLATT), inlet air temperature is 70°C.

250 g of a 5 % aqueous solution of calcium chloride in dry matter, were sprayed on the fluidized particles with a bifluid nozzle (schlick 1.2mm), on a bottom-spray position , as well known by those skilled in the art (in particular Vandamme et al Microencapsulation; Tec & Doc; 2007), and then dried.

Then, 1.12 kg of a 7 % aqueous solution of sodium alginate in dry matter, containing 225 g of Tocobiol L46 (ascorbyl palmitate and tocopherol acetate), and then the total preparation was sprayed on the fluidized particles with a bifluid nozzle (schlick 1.2 mm), on a bottom-spray position, and then dried. Solid particles are obtained.

Another 250 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1% (infrared measurement). Particle size distribution was below 300 µm (mean particle size measured by light diffraction on Malvern sizer) and bulk density was of 850 g/l.

### Example 5: Microcapsules containing vitamin C, SOD and Phytrox (3 layers)

1.2 kg of crystalline vitamin C were fluidized in a fluid bed (GPCG1 GLATT), inlet air temperature is 70°C.

325 g of a 10% aqueous solution of SOD in dry matter, were sprayed on the fluidized particles with a bifluid nozzle (schlick 1.2 mm), on a bottom-spray position, as well known by those skilled in the art (in particular Vandamme et al Microencapsulation; Tec & Doc; 2007), and then dried.

290 g of a 5 % aqueous solution of calcium chloride in dry matter, were sprayed on the fluidized particles with a bifluid nozzle (spraying system SS 2050), on a top-spray position, , and then dried.

Then, 1.65 kg of a 5 % aqueous solution of sodium alginate in dry matter, containing a mix (Tocobiol ®) of 25 g of tocopherol acetate and 12 g of ascorbyl palmitate were sprayed on the fluidized particles with a bifluid nozzle (spraying system SS 2050), on a top-spray position, and then dried. Solid particles are obtained.

Another 480 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1% (infrared measurement). Particle size distribution was below 300 µm (mean particle size measured by light diffraction on Malvern sizer) and bulk density was of 850 g/l.

### Example 6: Microcapsules containing vitamin C (3 layers)

1.2 kg of crystalline vitamin C were fluidized in a fluid bed (GPCG1 GLATT), inlet air temperature is 70°C.

262 g of a 5 % aqueous solution of calcium lactate in dry matter, were sprayed on the fluidized particles with a bifluid nozzle (schlick 1.2 mm), on a bottom-spray position, as well known by those skilled in the art (in particular Vandamme et al Microencapsulation; Tec & Doc; 2007), and then dried.

Then, 1120 g of a aqueous solution of 7% sodium alginate in dry matter and then was sprayed on the fluidized particles with a bifluid nozzle (schlick 1.2mm), on a bottom-spray position, and then dried. Solid particles are obtained.

Another 262 g of a 5 % aqueous solution of calcium lactate in dry matter was then spray dried on the fluidized particles. Solid particles are obtained. A final drying step of 30 mn was then processed at a maximum temperature of 50°C on the microcapsules.

The final microcapsules had a moisture content of 1.1% (infrared measurement). Particle size distribution was below 300 µm (mean particle size measured by light diffraction on Malvern sizer) and bulk density was of 850 g/l.

### Example 7: Microcapsules containing vitamin C (3 layers)

870 g of crystalline vitamin C were fluidized in a fluid bed (GPCG1 GLATT), inlet air temperature is 70°C.

600 g of a 5 % aqueous solution of calcium gluconate in dry matter, were sprayed on the fluidized particles with a bifluid nozzle (spraying system SS 2050), on a top-spray position, as well known by those skilled in the art (in particular Vandamme et al Microencapsulation; Tec & Doc; 2007), and then dried.

Then, 2.4 kg of a 5 % aqueous solution of sodium alginate in dry matter, containing 3 g of ascorbyl palmitate were sprayed on the fluidized particles with a bifluid nozzle (spraying system SS 2050), on a top-spray position, and then dried. Solid particles are obtained.

Another 600 g of a 5 % aqueous solution of calcium gluconate in dry matter was then spray dried on the fluidized particles. Solid particles are obtained. A final drying step of 30 mn was then processed at a maximum temperature of 50°C on the microcapsules.

The final microcapsules had a moisture content of 1.1% (infrared measurement). Particle size distribution was below 300 µm (mean particle size measured by light diffraction on Malvern sizer) and bulk density was of 850 g/l.

### Example 8: Microcapsules containing vitamin C (3 layers)

1 kg of calcium ascorbate were fluidized in a fluid bed (GPCG1 GLATT), inlet air temperature is 70°C.

635 g of a 5 % aqueous solution of calcium chloride in dry matter, were sprayed on the fluidized particles with a bifluid nozzle (schlick 1.2 mm), on a bottom-spray position, as well known by those skilled in the art (in particular Vandamme et al Microencapsulation; Tec & Doc; 2007), and then dried.

Then, 3.82 kg of a 7 % aqueous solution of sodium alginate in dry matter, containing 2.67 g of ascorbyl palmitate were sprayed on the fluidized particles with a bifluid nozzle (schlick 1.2mm), on a bottom-spray position, and then dried. Solid particles are obtained.

Another 635 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1% (infrared measurement). Particle size distribution was below 300 µm (mean particle size measured by light diffraction on Malvern sizer) and bulk density was of 850 g/l.

### Example 9: Microcapsules containing vitamin C, SOD and Tocobiol L46 (3 layers)

1.2 kg of crystalline vitamin C were fluidized in a fluid bed (GPCG1 GLATT), inlet air temperature is 70°C.

320 g of a 6% aqueous solution containing a mix of 13.2g of SOD and 6.6 g of Tocobiol L46 in dry matter, were sprayed on the fluidized particles with a bifluid nozzle (schlick 1.2 mm), on a bottom-spray position, as well known by those skilled in the art (in particular Vandamme et al Microencapsulation; Tec & Doc; 2007), and then dried.

Then, 1.13 kg of a 7 % aqueous solution of sodium alginate in dry matter was sprayed on the fluidized particles with a bifluid nozzle (schlick 1.2mm), on a bottom-spray position, and then dried. Solid particles are obtained.

Another 450 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1% (infrared measurement). Particle size distribution was below 300 µm (mean particle size measured by light diffraction on Malvern sizer) and bulk density was of 850 g/l.

### Example 10: Microcapsules containing vitamin C (7 layers)

0.8 kg of crystalline vitamin C were fluidized in a fluid bed (GPCG1 GLATT), inlet air temperature is 70°C.

174 g of a 5 % aqueous solution of calcium chloride in dry matter, were sprayed on the fluidized particles with a bifluid nozzle (schlick 1.2 mm), on a bottom-spray position, as well known by those skilled in the art (in particular Vandamme et al Microencapsulation; Tec & Doc; 2007), and then dried.

Then, 770 g of a 7 % aqueous solution of sodium alginate in dry matter, containing 1.8 g of ascorbyl palmitate were sprayed on the fluidized particles with a bifluid nozzle (schlick 1.2mm) on a bottom-spray position, and then dried. Solid particles are obtained.

Another 174 g of a 5 % aqueous solution of calcium chloride in dry matter was then spray dried on the fluidized particles

Then, 2.86 kg of a 7 % aqueous solution of sodium alginate in dry matter, were sprayed on the fluidized particles with a bifluid nozzle (spraying system SS 2050), on a top-spray position, and then dried.

Another 266 g of a 5 % aqueous solution of calcium chloride in dry matter was then spray dried on the fluidized particles. Solid particles are obtained.

Then, another 2.86 kg of a 7 % aqueous solution of sodium alginate in dry matter, were sprayed on the fluidized particles with a bifluid nozzle (spraying system SS 2050), on a top-spray position, and then dried.

Finally, another 266 g of a 5 % aqueous solution of calcium chloride in dry matter was then spray dried on the fluidized particles. Solid particles are obtained. A final drying step of 30 mn was then processed at a maximum temperature of 50°C on the microcapsules.

The final microcapsules had a moisture content of 1.1% (infrared measurement). Particle size distribution was below 500 µm (mean particle size measured by light diffraction on Malvern sizer) and bulk density was of 750 g/l.

### Example 11 : Microcapsules containing SOD and Lac gum (4 layers)

600 g of freeze-dried (SOD) were fluidized in a fluid bed (GPCG1 GLATT), inlet air temperature is 30°C. 360 g of Lac gum were dissolved at 10% dry matter in ethanol and sprayed on the fluidized SOD, and dried.

120 g of a 10% solution of ascorbic acid was then sprayed and dried.

Another 210g of Lac gum were dissolved at 10% dry matter in ethanol and sprayed on the fluidized SOD and then dried.

A final 20 g of chlorhydric acid solution 1M, diluted in 250 g of water, were sprayed on the fluidized product, and then dried.

Solid particles are obtained. A final drying step of 30 mn was then processed at a maximum temperature of 40°C on the microcapsules.

The Final product had a moisture content of 1.9% and an average particle size mean of 380µm (Median diameter Dv(0.5) measured by laser particle sizer Malvern)

### Example 12 : Microcapsules containing Ferric sulfate (3 layers)

920 g of crystalline ferric sulfate heptahydrate were fluidized in a fluid bed (GPCG1 GLATT), inlet air temperature is 40°C.

100 g of a 10 % aqueous solution of calcium chloride in dry matter, were sprayed on the fluidized particles with a bifluid nozzle (spraying system SS 2050), on a top-spray position, as well known by those skilled in the art (in particular Vandamme et al Microencapsulation; Tec & Doc; 2007), and then dried.

Then, 795 g of a 7.5 % aqueous solution of sodium alginate in dry matter, were sprayed on the fluidized particles with a bifluid nozzle (spraying system SS 2050), on a top-spray position, and then dried. Solid particles are obtained.

Another 100 g of a 10 % aqueous solution of calcium chloride in dry matter was then spray dried on the fluidized particles. Solid particles are obtained. A final drying step of 30 mn was then processed at a maximum temperature of 30°C on the microcapsules.

The final microcapsules had a moisture content of 19% (infrared measurement). Particle size distribution was 310 µm (mean particle size measured by light diffraction on Malvern sizer) and bulk density was of 870 g/l.

### Example 13 : Microcapsules containing oxidizable oil (3 layers)

349 g of tocoferol acetate was mixed with 160g of modified starch, 247 g of maltodextrin, 40 g of alginate and 1.22 kg of water.

The preparation was homogenized at 200 bars.

Another 8 g of a calcium chloride solution at 5% dry matter was prepared.

The homogenized preparation was then sprayed in a single stage dryer (Minor production tower, GEA-NIRO) combined with the calcium chloride solution as a mean for insolubility with a trifluid nozzle. Drying was made with an inlet temperature of 120°C and outlet temperature of 70°C.

150 g of a 5% solution of calcium chloride in dry matter were sprayed on the fluidized particles with a bifluid nozzle and then dried.

500 g of the dried particles obtained are then fluidized in a fluid bed (Glatt GPCG1).

800 g of a 5% aqueous solution of sodium alginate in dry matter were sprayed on the fluidized particles with a bifluid nozzle, on a top spray position and then dried.

150 g of a 5% solution of calcium chloride in dry matter were sprayed on the fluidized particles with a bifluid nozzle and then dried.

The final microcapsules are insoluble and have a mean particle size of 240µm (mean particle size measured by light diffraction on Malvern sizer), a moisture content of 3.3 % and a bulk density of 350 g/l.

### Example 14: Microcapsules containing vitamin C

1.2 kg of crystalline vitamin C were fluidized in a fluid bed (GPCG1 GLATT), inlet air temperature is 70°C.

1000 g of a 10% ethylcellulose in dry matter in ethanol solution were sprayed on the fluidized particles with a bifluid nozzle (spraying system SS 2050), on a top-spray position, as well known by those skilled in the art (in particular Vandamme et al Microencapsulation; Tec & Doc; 2007), and then dried.

290 g of a 5 % solution of calcium chloride in dry matter, were sprayed on the fluidized particles with a bifluid nozzle (spraying system SS 2050), on a top-spray position, and then dried.

Then, 1.65 kg of a 5 % solution of sodium alginate in dry matter, containing 3 g of ascorbyl palmitate were sprayed on the fluidized particles with a bifluid nozzle (spraying system SS 2050), on a top-spray position, and then dried. Solid particles are obtained.

Another 480 g of a 5 % solution of calcium chloride in dry matter was then spray dried on the fluidized particles. Solid particles are obtained A final drying step of 30 mn was then processed at a maximum temperature of 50°C on the microcapsules.

The final microcapsules had a moisture content of 1.2% (infrared measurement). Particle size distribution was 480 µm (mean particle size measured by light diffraction on Malvern sizer) and bulk density was of 340 g/l.

### Example 15 : Monitoring of the microcapsules in an aqueous medium

0.5 g to 1g of the capsules of example 6 are dispersed in the sampler wet device for liquids (MS 519 type) of a particle sizer MALVERN, MASTERSIZER MAM 5005, type MSS using the 300 RF lens and demineralized water.

Particle size distribution is measured each 5 mn during 30 mn. Dispersion in the wet device is maintained during all the 30 mn measurement.

As seen in table 1, a small decrease of the particle occurs, linked to the dispersion of the biggest agglomerates and then mean particle size keeps constant all along the 30 mn, showing the insolubility of the microcapsules of the invention.

**Table 1**

| Time | (min) | 0 | 5 | 10 | 15 | 20 | 30 |
|---|---|---|---|---|---|---|---|
| Granulometry | D(v;0,5) (µm) | 198 | 185 | 181 | 182 | 178 | 173 |

### Example 16: Microcapsules containing oxidizable vitamin (vitamin A) - 4 layers

828 g of vitamin A acetate were mixed with 376g of modified starch, 562 g of maltodextrin, 95 g of alginate and 2.79 kg of water at 60°C.

The preparation was homogenized at 250 bars.

The homogenized preparation was then sprayed in a single stage dryer (Minor production tower, GEA-NIRO). Drying was made with an inlet temperature of 140°C and outlet temperature of 70°C.

### Solid particles are obtained

The solid particles obtained were fluidized in a fluid bed (GPCG1 GLATT), inlet air temperature is 70°C.

800 g of a 2.5 % solution of calcium chloride in dry matter were then spray dried on the fluidized particles.

Another 2.0 kg of a 5 % solution of sodium alginate in dry matter were sprayed on the fluidized particles with a bifluid nozzle (spraying system SS 2050), on a top-spray position, as well known by those skilled in the art (in particular Vandamme et al Microencapsulation; Tec & Doc; 2007), and then dried. Solid particles are obtained.

Another 800 g of a 5 % solution of calcium chloride in dry matter were then spray dried on the fluidized particles. A final drying step of 30 mn was then processed at a maximum temperature of 50°C on the microcapsules.

The final microcapsules had a moisture content of 3.5 % (infrared measurement). Particle size distribution was below 300 µm (mean particle size measured by light diffraction on Malvern sizer) and bulk density was of 850 g/l.

### Example 17: Microcapsules containing oxidizable vitamin stabilized with copper sulfate (4 layers)

828 g of vitamin A acetate were mixed with 376g of modified starch, 562 g of maltodextrin, 95 g of alginate and 2.79 kg of water at 60°C.

The preparation was homogenized at 250 bars.

The homogenized preparation was then sprayed in a single stage dryer (Minor production tower, GEA-NIRO). Drying was made with an inlet temperature of 140°C and outlet temperature of 70°C.

Solid particles are obtained.

The solid particles obtained were fluidized in a fluid bed (GPCG1 GLATT), inlet air temperature is 70°C.

800 g of a 2.5 % solution of copper sulfate in dry matter were then spray dried on the fluidized particles

Another 2.0 kg of a 5 % solution of sodium alginate in dry matter were sprayed on the fluidized particles with a bifluid nozzle (spraying system SS 2050), on a top-spray position, as well known by those skilled in the art (in particular Vandamme et al Microencapsulation; Tec & Doc; 2007), and then dried. Solid particles are obtained.

Another 800 g of a 5 % solution of copper sulfate in dry matter were then spray dried on the fluidized particles. A final drying step of 30 mn was then processed at a maximum temperature of 50°C on the microcapsules.

The final microcapsules had a moisture content of 3.5 % (infrared measurement). Particle size distribution was below 300 µm (mean particle size measured by light diffraction on Malvern sizer) and bulk density was of 850 g/l.

### Example 18: Microcapsules containing oxidizable vitamin stabilized with magnesium sulfate (4 layers)

828 g of vitamin A acetate were mixed with 376g of modified starch, 562 g of maltodextrin, 95 g of alginate and 2.79 kg of water at 60°C.

The preparation was homogenized at 250 bars.

The homogenized preparation was then sprayed in a single stage dryer (Minor production tower, GEA-NIRO). Drying was made with an inlet temperature of 140°C and outlet temperature of 70°C.

Solid particles are obtained.

The solid particles obtained were fluidized in a fluid bed (GPCG1 GLATT), inlet air temperature is 70°C.

800 g of a 2.5 % solution of magnesium sulfate in dry matter were then spray dried on the fluidized particles

Another 2.0 kg of a 5 % solution of sodium alginate in dry matter were sprayed on the fluidized particles with a bifluid nozzle (spraying system SS 2050), on a top-spray position, as well known by those skilled in the art (in particular Vandamme et al Microencapsulation; Tec & Doc; 2007), and then dried. Solid particles are obtained.

Another 800 g of a 5 % solution of magnesium sulfate in dry matter were then spray dried on the fluidized particles. A final drying step of 30 mn was then processed at a maximum temperature of 50°C on the microcapsules.

The final microcapsules had a moisture content of 3.5 % (infrared measurement). Particle size distribution was below 300 µm (mean particle size measured by light diffraction on Malvern sizer) and bulk density was of 850 g/l.

### Example 19: Microcapsules containing oxidizable vitamin (vitamin A) stabilized with calcium lactate (4 layers)

880 g of vitamin A acetate were mixed with 400g of modified starch, 620 g of maltodextrin, 100 g of alginate and 2.79 kg of water at 60°C.

The preparation was homogenized at 250 bars.

The homogenized preparation was then sprayed in a single stage dryer (Minor production tower, GEA-NIRO). Drying was made with an inlet temperature of 140°C and outlet temperature of 70°C.

Solid particles are obtained.

1kg of the solid particle obtained were fluidized in a fluid bed (GPCG1 GLATT), inlet air temperature is 70°C.

500 g of a 2.5 % solution of calcium lactate in dry matter were then spray dried on the fluidized particles

Another 1.0 kg of a 5 % solution of sodium alginate in dry matter were sprayed on the fluidized particles with a bifluid nozzle (spraying system SS 2050), on a top-spray position, as well known by those skilled in the art (in particular Vandamme et al Microencapsulation; Tec & Doc; 2007), and then dried. Solid particles are obtained.

Another 500 g of a 5 % solution of calcium lactate in dry matter were then spray dried on the fluidized particles. A final drying step of 30 mn was then processed at a maximum temperature of 50°C on the microcapsules.

The final microcapsules had a moisture content of 2.1 % (infrared measurement). Particle size distribution was 283 µm (mean particle size measured by light diffraction on Malvern sizer).

## Claims

1. Microcapsule consisting in or containing:
• a core consisting in or comprising an oxidizable active (OA),
said core being optionally surrounded by a precoating consisting in or comprising an antioxidant compound X,
said core, optionally surrounded by a precoating consisting in or comprising said antioxidant compound X, being optionally surrounded by a coating consisting in or comprising a water insoluble compound,
• a first layer surrounding the core by either:
- a water soluble or organic solvent, in particular ethanol, soluble encapsulating agent (EA 1), or
- means for inducing water insolubility of said encapsulating agent (MII 1),
• a second layer surrounding the first layer by:
- a water soluble or organic solvent, in particular ethanol, soluble encapsulating agent (EA 1) when the first layer is means for inducing water insolubility of said encapsulating agent,
- means for inducing water insolubility of a water soluble or organic solvent, in particular ethanol, soluble encapsulating agent (MII 1) when the first layer is said encapsulating agent,
the first or the second layer from the core optionally comprising further an antioxidant compound Y,
and
• an alternation of n layers of water soluble or organic solvent, in particular ethanol, soluble encapsulating agents (EA 2) and of m layers of means for inducing water insolubility of said encapsulating agents (MII 2), surrounding the second layer, starting with a layer of the same nature as the nature of the first one,
m being equal to 1, 2, 3, 4, 5, 6, 7, 8, 9 or 10,
n = m, when the first layer is said EA 1, or n = m - 1, when the first layer is said MII 1,
the last layer being MII 2,
each EA 2 being preceded and/or followed by means for inducing water insolubility (MII 2) of said EA2,
with the proviso that:
when the first layer is MII 1 and the second layer is EA 1, and when m is equal to 1, then MII 2 are means to induce water insolubility of EA 1.

2. Microcapsule according to claim 1, consisting in or containing:
• a core consisting in or comprising an oxidizable active (OA),
said core being optionally surrounded by a precoating consisting in or comprising an antioxidant compound X,
• a first layer surrounding the core by either:
- a water soluble or organic solvent, in particular ethanol, soluble encapsulating agent (EA 1), or
- means for inducing water insolubility of said encapsulating agent (MII 1),
• a second layer surrounding the first layer by:
- a water soluble or organic solvent, in particular ethanol, soluble encapsulating agent (EA 1) when the first layer is means for inducing water insolubility of said encapsulating agent,
- means for inducing water insolubility of a water soluble or organic solvent, in particular ethanol, soluble encapsulating agent (MII 1) when the first layer is said encapsulating agent,
the first or the second layer from the core optionally comprising further an antioxidant compound Y,
and
• an alternation of n layers of said EA 1 and of m layers of said MII 1, surrounding the second layer, starting with a layer of the same nature as the nature of the first one,
m being equal to 1, 2, 3, 4, 5, 6, 7, 8, 9 or 10,
n = m, when the first layer is said EA 1, or n = m - 1, when the first layer is said MII 1,
the last layer being MII 1.

3. Microcapsule according to claim 1, wherein:
- the EA 2 of said n layers are identical,
- the MII 2 of said m layers are identical,
- EA 1 is not identical to said EA 2, and/or MII 1 are not identical to said MII 2.

4. Microcapsule according to anyone of claims 1 to 3, wherein:
• said means for inducing water insolubility are an agent chemically reacting with said EA, or
• said means for inducing water insolubility are an acid, a base, or a buffer.

5. Microcapsule according to anyone of claims 1 to 4, wherein said layers are such that, when said microcapsule is placed in an alimentary, cosmetically or pharmaceutically acceptable medium:
• said OA is not degraded by element(s) of said medium, and
• said element(s) of the medium is (are) not degraded by said OA.

6. Microcapsule according to anyone of claims 1 to 5, wherein the mass of said OA is within the range from 40 to 99.5%, preferably from 60 to 98%, more preferably from 70 to 95%, of the total mass of said microcapsule.

7. Microcapsule according to anyone of claims 1 to 6, wherein said microcapsule size is in range from 1 µm to 3 mm, preferably from 50 to 1000 µm, more preferably from 100 to 600 µm.

8. Microcapsule according to anyone of claims 1 to 7, wherein said OA is in a crystalline or amorphous state, in particular a microcapsule wherein said core consists in or comprises an OA in a crystalline or amorphous state and at least one additional element selected among drying agents, antioxidant agents, filmogen agents and emulsifying agents.

9. Microcapsule according to anyone of claims 1 to 8, wherein said water soluble EA are selected from alginates of monovalent cations, in particular Na⁺ alginates and K⁺ alginates,
in particular, wherein said EA are selected from alginates of monovalent cations, more particularly Na⁺ alginates and K⁺ alginates, and wherein said MII are a salt wherein the cation is a divalent metallic cation, more particularly Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

10. Microcapsule according to anyone of claims 1 to 8, wherein said EA are lac gum,
in particular wherein said EA are lac gum, and wherein said MII are an acid, in particular ascorbic acid, citric acid, acetic acid or hydrochloric acid.

11. Microcapsule according to anyone of claims 1 to 10,
❖ wherein said OA:
• is selected from the group comprising vitamin B5, vitamin B6, vitamin B8, vitamin B9, vitamin A, vitamin D3, vitamin K, vitamin E and vitamin C, in particular natural vitamin C, synthetic vitamin C, or salts of L-ascorbic acid, more particularly sodium L-ascorbate, calcium L-ascorbate and iron L-ascorbate, or
• comprises vitamin C, said OA being in particular a fruit juice comprising vitamin C, in particular orange juice, kiwi juice, cranberry juice, acerola juice or goji juice, said fruit juice being optionally concentrated or dried,
or
❖ wherein said OA is selected from the group comprising dihydroxyacetone (DHA), enriched in omega 3 or omega 6 oil, and oxidizable enzymes, in particular superoxydismutase (SOD),
said OA being in particular SOD, more particularly freeze-dried SOD or spray-dried SOD, or
❖ wherein said OA is a salt constituted by an inorganic or organic anion and a transition metal cation of oxidation state +2, said salt being in particular selected from the group comprising iron (II) sulfate, manganese (II) sulfate, chrome (II) sulfate, iron (II) oxalate, manganese (II) oxalate, chrome (II) oxalate, iron (II) acetate, manganese (II) acetate and chrome (II) acetate.

12. Microcapsule according to anyone of claims 1 to 11, comprising at least one antioxidant, said antioxidant:
- being comprised in said core, or
- being, or being comprised in, said coating surrounding said core, or
- being comprised in said first or second layer.
in particular a microcapsule, wherein said antioxidant is selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
in particular a microcapsule, wherein said core is surrounded by a precoating consisting in or comprising an antioxidant compound selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said antioxidant being in particular SOD,
in particular a microcapsule, wherein said first or the second layer from the core comprises further an antioxidant compound selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said antioxidant being in particular a mixture of ascorbyl palmitate and tocopherol acetate,
in particular a microcapsule, wherein said core is surrounded by a precoating consisting in or comprising a first antioxidant compound selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said first antioxidant being in particular SOD,
and wherein said first or the second layer from the core comprises further a second antioxidant compound selected from the group comprising sodium ascorbate, ascorbyl palmitate, vitamin E, tocopherol acetate, superoxydismutase (SOD), polyphenols and mixtures thereof, in particular a mixture of ascorbyl palmitate and tocopherol acetate,
said second antioxidant being in particular a mixture of ascorbyl palmitate and tocopherol acetate.

13. Microcapsule according to anyone of claims 1 to 12,
❖ wherein the first layer is MII and wherein m is equal to 1, corresponding to a microcapsule comprising:
- a core,
- a first layer of MII 1,
- a second layer of EA 1, and
- a third layer of MII 2,
MII 2 being means to induce water insolubility of EA 1,
and in particular wherein said EA 1 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, magnesium lactate, magnesium gluconate, magnesium citrate, magnesium phosphate, CuCl₂, copper sulfate, copper sulfate pentahydrate, copper nitrate, copper nitrate hexahydrate or copper phosphate,
or
❖ wherein the first layer is EA 1 and wherein m is equal to 1, corresponding to a microcapsule comprising:
- a core,
- a first layer of EA 1,
- a second layer of MII 1,
- a third layer of EA 2, and
- a forth layer of MII 2,
and in particular wherein said EA 1 and EA 2 are Lac gum, said MII 1 and MII 2 are an acid, in particular ascorbic acid, citric acid, acetic acid or hydrochloric acid, or wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺, Mg²⁺ or Cu²⁺, said salt being in particular CaCl₂, MgCl₂, calcium lactate, calcium gluconate, calcium citrate, calcium phosphate, magnesium lactate, magnesium gluconate, magnesium citrate, magnesium phosphate, CuCl₂, copper sulfate, copper sulfate pentahydrate, copper nitrate, copper nitrate hexahydrate or copper phosphate,
or
❖ wherein the first layer is EA 1 and wherein m is equal to 1, corresponding to a microcapsule comprising:
- a core,
- a coating consisting in or comprising a water insoluble compound, in particular ethylcellulose,
- a first layer of EA 1,
- a second layer of MII 1,
- a third layer of EA 2, and
- a forth layer of MII 2,
and in particular wherein said EA 1 and EA 2 are Lac gum, said MII 1 and MII 2 are an acid, in particular ascorbic acid, citric acid, acetic acid or hydrochloric acid,
or
❖ wherein the first layer is MIl and wherein m is equal to 2, corresponding to a microcapsule comprising:
- a core,
- a first layer of MII 1,
- a second layer of EA 1,
- a third layer of MII 2,
- a fourth layer of EA 2, and
- a fifth layer of MII 2,
and in particular wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate,
or
❖ wherein the first layer is MII 1 and wherein m is equal to 3, corresponding to a microcapsule comprising:
- a core,
- a first layer of MII 1,
- a second layer of EA 1,
- a third layer of MII 2,
- a fourth layer of EA 2,
- a fifth layer of MII 2,
- a sixth layer of EA 2,
- a seventh layer of MII 2.
and in particular wherein said EA 1 and EA 2 are selected from alginates of monovalent cations, in particular Na⁺ alginates and K⁺ alginates and said MII 1 and MII 2 are selected from salts wherein the cation is a divalent metallic cation, in particular Ca²⁺ or Mg²⁺, said salt being in particular CaCl₂, MgCl₂, calcium lactate, calcium gluconate, calcium citrate, calcium phosphate, magnesium lactate, magnesium gluconate, magnesium citrate or magnesium phosphate.

14. Process of preparation of microcapsules according to anyone of claims 1 to 13, comprising:
(a) a step of spraying a mixture of a water soluble or organic solvent, in particular ethanol, soluble encapsulating agent (EA 1), or of means for inducing water insolubility of said encapsulating agent (MII 1), on a core consisting in or comprising an oxidizable active (OA), said core being optionally surrounded by a precoating consisting in or comprising an antioxidant compound, said core, optionally surrounded by a precoating consisting in or comprising said antioxidant compound X, being optionally surrounded by a coating consisting in or comprising a water insoluble compound,
to obtain particles comprising a core surrounded by a first layer,
(b) a step of spraying a mixture of a water soluble or organic solvent, in particular ethanol, soluble encapsulating agent (EA 1) when the first layer is means for inducing water insolubility of said EA, or of means for inducing water insolubility of an water soluble or organic solvent, in particular ethanol, soluble EA (MII 2) when the first layer is said EA 1, on particles obtained in step (a), to obtain particles comprising a core surrounded by a first and a second layer,
(c) (m+n) steps of spraying in alternation n times mixtures of water soluble or organic solvent, in particular ethanol, soluble encapsulating agents (EA 2) and water, and m times mixtures of means for inducing water insolubility of said encapsulating agents (MII 2) and water, starting with the spraying of a mixture of the same nature as the nature of the step (a) spraying, on particles obtained in step (b), to obtain said microcapsules,
m and n being as defined above,
the last layer being MII 2,
each EA 2 being preceded and/or followed by means for inducing water insolubility (MII 2) of said EA2,
with the proviso that:
when the first layer is MII 1 and the second layer is EA 1, and when m is equal to 1, then MII 2 are means to induce water insolubility of EA 1,
said process comprising in particular, after said spraying steps, a step of drying said microcapsules to obtain dried microcapsules.

15. Use of microcapsules according to anyone of claims 1 to 13 for the preparation of a food or beverage composition,
in particular, said food or beverage composition comprising said microcapsules and:
- fermented dairy products, in particular yogurts, more particularly yogurts containing probiotics,
- unfermented dairy products,
- an animal or vegetal milk, in particular almond milk, coconut milk, rice milk and soy milk, said composition being unfermented or fermented,
- one or more fruits in addition of said microcapsules,
- one or more vegetables in addition of said microcapsules,
- water, one or more sugar and/or sweetener, and flavoring(s),
in particular, said beverage composition comprising:
• said microcapsules, wherein said OA is in particular SOD,
• water,
• optionally a fruit juice,
• optionally at least one vitamin, in particular vitamin C or riboflavin.

## Patentansprüche

1. Mikrokapsel bestehend aus oder enthaltend:
❖ einen Kern bestehend aus oder umfassend einen oxidierbaren Aktivstoff (OA),
wobei der Kern wahlweise durch eine Vorbeschichtung umgeben ist, die aus einer Antioxidationsmittelverbindung X besteht oder diese umfasst,
wobei der Kern, der wahlweise durch eine Vorbeschichtung umgeben ist, die aus einer Antioxidationsmittelverbindung X besteht oder diese umfasst, wahlweise durch eine Beschichtung umgeben ist, die aus einer wasserunlöslichen Verbindung besteht oder diese umfasst,
❖ eine erste Schicht, die den Kern umgibt entweder durch:
- ein wasserlösliches oder organisches Lösungsmittel, insbesondere Ethanol, lösliches Verkapselungsmittel (EA 1) oder
- Mittel zum Auslösen von Wasserunlöslichkeit des Verkapselungsmittels (MII 1),
❖ eine zweite Schicht, die die erste Schicht umgibt durch:
- ein wasserlösliches organisches Lösungsmittel, insbesondere Ethanol, lösliches Verkapselungsmittel (EA 1), wenn die erste Schicht ein Mittel zum Auslösen von Wasserunlöslichkeit des Verkapselungsmittels ist,
- Mittel zum Auslösen der Wasserunlöslichkeit eines wasserlöslichen oder organischen Lösungsmittels, insbesondere Ethanol, lösliches Verkapselungsmittel (MII 1), wenn die erste Schicht das Verkapselungsmittel ist,
wobei die erste oder die zweite Schicht des Kerns wahlweise ferner eine Antioxidationsmittelverbindung Y umfasst
und
❖ eine Abwechslung von n Schichten von wasserlöslichem oder organischem Lösungsmittel, insbesondere Ethanol, löslichem Verkapselungsmittel (EA 2) und m Schichten von Mittel zum Auslösen von Wasserunlöslichkeit der Verkapselungsmittel (MII 2), die die zweite Schicht umgeben, beginnend mit einer Schicht derselben Natur wie die Natur der ersten,
wobei m gleich 1,2,3,4,5,6,7,8,9 oder 10 ist,
n = m, wenn die erste Schicht das EA 1 ist oder n = m - 1, wenn die erste Schicht das MII 1 ist,
wobei die letzte Schicht MII 2 ist,
wobei jedem EA 2 Mittel zum Auslösen von Wasserunlöslichkeit (MII 2) des EA2 vorausgeht und/oder folgt,
mit der Maßgabe, dass:
wenn die erste Schicht MII 1 ist und die zweite Schicht EA 1 ist, und wenn m gleich 1 ist, dann sind MII 2 Mittel zum Auslösen von Wasserunlöslichkeit von EA 1.

2. Mikrokapsel nach Anspruch 1, bestehend aus oder enthaltend:
❖ einen Kern bestehend aus oder umfassend einen oxidierbaren Aktivstoff (OA),
wobei der Kern wahlweise durch eine Vorbeschichtung umgeben ist, die aus einer Antioxidatiorismittelverbindung X besteht oder diese umfasst,
❖ eine erste Schicht, die den Kern umgibt entweder durch:
- ein wasserlösliches oder organisches Lösungsmittel, insbesondere Ethanol, lösliches Verkapselungsmittel (EA 1) oder
- Mittel zum Auslösen von Wasserunlöslichkeit des Verkapselungsmittels (MII 1),
❖ eine zweite Schicht, die die erste Schicht umgibt durch:
- ein wasserlösliches oder organisches Lösungsmittel, insbesondere Ethanol, lösliches Verkapselungsmittel (EA 1), wenn die erste Schicht ein Mittel zum Auslösen der Wasserunlöslichkeit des Kapselungsmittels ist,
- Mittel zum Auslösen der Wasserunlöslichkeit des
wasserlöslichen oder organischen Lösungsmittels, insbesondere Ethanol, löslichen Verkabelungsmittel (MII 1), wenn die erste Schicht das Verkapselungsmittel ist, ist
wobei die erste oder die zweite Schicht des Kerns wahlweise ferner eine Antioxidationsmittelverbindung Y umfasst
und
❖ eine Abwechslung von n Schichten des EA 1 und von m Schichten des MII 1, die die zweite Schicht umgeben, beginnend mit einer Schicht derselben Natur wie die Natur der ersten,
wobei m gleich 1,2,3,4,5,6,7,8,9 oder 10 ist,
n = m, wenn die erste Schicht das EA 1 ist oder n = m - 1, wenn die erste Schicht das MII 1 ist,
wobei die letzte Schicht MII 1 ist.

3. Mikrokapsel nach Anspruch 1, wobei:
- die EA 2 der n Schichten identisch sind,
- die MII 2 der m Schichten identisch sind,
- EA 1 nicht mit EA 2 identisch ist und/oder MII 1 nicht mit MII 2 identisch ist.

4. Mikrokapsel nach einem der Ansprüche 1 bis 3, wobei
❖ die Mittel zum Auslösen der Wasserunlöslichkeit Mittel sind, die chemisch mit dem EA reagieren oder
❖ die Mittel zum Auslösen von Wasserunlöslichkeit eine Säure, eine Base oder ein Puffer sind.

5. Mikrokapsel nach einem der Ansprüche 1 bis 4, wobei die Schichten derart sind, dass, wenn die Mikrokapsel in ein Nahrungsmittel-, kosmetisches oder pharmazeutisch akzeptables Medium eingegeben wird:
❖ der OA nicht durch ein Element/Elemente des Mediums abgebaut wird und
❖ das Element/die Elemente des Mediums nicht durch den OA abgebaut wird/werden.

6. Mikrokapsel nach einem der Ansprüche 1 bis 5, wobei die Masse des OA innerhalb des Bereichs von 40 bis 99,5 %, bevorzugt 60 bis 98 %, noch bevorzugter 70 bis 95 % der Gesamtmasse der Mikrokapsel liegt.

7. Mikrokapsel nach einem der Ansprüche 1 bis 6, wobei die Mikrokapselgröße im Bereich von 1 *µ*m bis 3 mm, bevorzugt 50 bis 1000 *µ*m, noch bevorzugter 100 bis 600 *µ*m liegt.

8. Mikrokapsel nach einem der Ansprüche 1 bis 7, wobei der OA in einem kristallinen oder amorphen Zustand vorliegt, insbesondere Mikrokapsel, wobei der Kern aus einem OA in einem kristallinen oder amorphen Zustand und mindestens einem zusätzlichen Element ausgewählt unter Trockenmitteln, Antioxidationsmitteln, Filmbildnern und Emulgiermitteln besteht oder diese umfasst.

9. Mikrokapsel nach einem der Ansprüche 1 bis 8, wobei die wasserlöslichen EA aus Alginaten einwertiger Kationen, insbesondere Na⁺-Alginaten und K⁺-Alginaten ausgewählt werden,
wobei insbesondere die EA aus Alginaten einwertiger Kationen, noch spezifischer Na⁺-Alginaten und K⁺-Alginaten ausgewählt werden und wobei die MII ein Salz sind, wobei das Kation ein zweiwertiges Metallkation, noch spezifischer Ca²⁺ oder Mg²⁺ ist, wobei das Salz insbesondere CaCl₂, MgCl₂, Calciumlactat, Calciumgluconat, Calciumcitrat, Calciumphosphat, Magnesiumlactat, Magnesiumgluconat, Magnesiumcitrat oder Magnesiumphosphat ist.

10. Mikrokapsel nach einem der Ansprüche 1 bis 8, wobei die EA Gummi Lac sind, wobei insbesondere die EA Gummi Lac sind und wobei die MII eine Säure, insbesondere Ascorbinsäure, Zitronensäure, Essigsäure oder Salzsäure sind.

11. Mikrokapsel nach einem der Ansprüche 1 bis 10,
❖ wobei der OA:
❖ aus der Gruppe ausgewählt wird umfassend Vitamin B5, Vitamin B6, Vitamin B8, Vitamin B9, Vitamin A, Vitamin D3, Vitamin K, Vitamin E und Vitamin C, insbesondere natürliches Vitamin C, synthetisches Vitamin C oder Salze von L-Ascorbinsäure, noch spezifischer Natrium-L-ascorbat, Calcium-L-ascorbat und Eisen-L-ascorbat oder
❖ Vitamin C umfasst, wobei der OA insbesondere ein Obstsaft, der Vitamin C umfasst, insbesondere Orangensaft, Kiwisaft, Preiselbeersaft, Acerolakirschensaft oder Gojisaft ist und der Obstsaft wahlweise konzentriert oder getrocknet ist,
oder
❖ wobei der OA aus der Gruppe ausgewählt wird umfassend Dihydroxyaceton (DHA), mit Omega 3 oder Omega 6 angereichertem Öl und oxydierbaren Enzymen, insbesondere Superoxydismutase (SOD), wobei der OA insbesondere SOD, noch spezifischer gefriergetrocknete SOD oder sprühgetrocknete SOD ist,
oder
❖ wobei der OA ein Salz ist, das aus einem anorganischen oder organischen Anion und einem Übergangsmetallkation des Oxidationszustands +2 besteht, wobei das Salz insbesondere aus der Gruppe ausgewählt ist umfassend Eisen(II)sulfat, Mangan(II)sulfat, Chrom(II)sulfat, Eisen(II)oxalat, Mangan(II)oxalat, Chrom(II)oxalat, Eisen(II)acetat, Mangan(II)acetat und Chrom(II)acetat.

12. Mikrokapsel nach einem der Ansprüche 1 bis 11, umfassend mindestens ein Antioxidationsmittel, wobei das Antioxidationsmittel:
- in dem Kern enthalten ist oder
- die Beschichtung, die den Kern umgibt, ist oder darin enthalten ist oder
- in der ersten oder zweiten Schicht enthalten ist, insbesondere Mikrokapsel, wobei das Antioxidationsmittel aus der Gruppe ausgewählt wird umfassend Natriumascorbat, Ascorbylpalmitat, Vitamin E, Tocopherolacetat, Superoxydismutase (SOD), Polyphenole und Mischungen davon, insbesondere eine Mischung von Ascorbylpalmitat und Tocopherolacetat,
insbesondere Mikrokapsel, wobei der Kern von einer Vorbeschichtung umgeben ist, die aus einer Oxidationsmittelverbindung besteht oder diese umfasst, ausgewählt aus der Gruppe umfassend Natriumascorbat, Ascorbylpalmitat, Vitamin E, Tocopherolacetat, Superoxydismutase (SOD), Polyphenole und Mischungen davon, insbesondere eine Mischung von Ascorbylpalmitat und Tocopherolacetat,
wobei das Antioxidationsmittel insbesondere SOD ist,
insbesondere Mikrokapsel, wobei die erste oder die zweite Schicht des Kerns ferner eine Antioxidationsmittelverbindung umfasst ausgewählt aus der Gruppe umfassend Natriumascorbat, Ascorbylpalmitat, Vitamin E, Tocopherolacetat, Superoxydismutase (SOD), Polyphenole und Mischungen davon, insbesondere eine Mischung von Ascorbylpalmitat und Tocopherolacetat,
wobei das Antioxidationsmittel insbesondere eine Mischung von Ascorbylpalmitat und Tocopherolacetat ist,
insbesondere Mikrokapsel, wobei der Kern von einer Vorbeschichtung umgeben ist bestehend aus oder umfassend eine erste Antioxidationsmittelverbindung ausgewählt aus der Gruppe bestehend aus Natriumascorbat, Ascorbylpalmitat, Vitamin E, Tocopherolacetat, Superoxydismutase (SOD), Polyphenolen und Mischungen davon, insbesondere einer Mischung von Ascorbylpalmitat und Tocopherolacetat,
wobei das erste Antioxidationsmittel insbesondere SOD ist,
und wobei die erste oder die zweite Schicht des Kerns ferner eine zweite Antioxidationsmittelverbindung umfasst ausgewählt aus der Gruppe umfassend Natriumascorbat, Ascorbylpalmitat, Vitamin E, Tocopherolacetat, Superoxydismutase (SOD), Polyphenole und Mischungen davon, insbesondere eine Mischung von Ascorbylpalmitat und Tocopherolacetat, wobei das zweite Antioxidationsmittel insbesondere eine Mischung von Ascorbylpalmitat und Tocopherolacetat ist.

13. Mikrokapsel nach einem der Ansprüche 1 bis 12,
❖ wobei die erste Schicht MII ist und wobei m gleich 1 ist, entsprechend einer Mikrokapseln umfassend:
- einen Kern,
- eine erste Schicht MII 1,
- eine zweite Schicht EA 1 und
- eine dritte Schicht MII 2,
- wobei MII 2 ein Mittel zum Auslösen von Wasserunlöslichkeit von EA 1 ist,
und wobei insbesondere die EA 1 aus Alginaten einwertiger Kationen, insbesondere Na⁺-Alginaten und K⁺-Alginaten ausgewählt werden und wobei die MII und MII 2 aus Salzen ausgewählt werden, wobei das Kation ein zweiwertiges Metallkation, insbesondere Ca²⁺, Mg²⁺ oder Cu²⁺ ist, wobei das Salz insbesondere CaCl₂, MgCl₂, Calciumlactat, Calciumgluconat, Calciumcitrat, Calciumphosphat, Magnesiumlactat, Magnesiumgluconat, Magnesiumcitrat, Magnesiumphosphat, CuCl₂, Kupfersulfat, Kupfersulfatpentahydrat, Kupfernitrat, Kupfernitrathexahydrat oder Kupferphosphat ist,
oder
❖ wobei die erste Schicht EA 1 ist und wobei m gleich 1 ist, entsprechend einer Mikrokapseln umfassend:
- einen Kern,
- eine erste Schicht EA 1,
- eine zweite Schicht MII 1,
- eine dritte Schicht EA 2 und
- eine vierte Schicht MII 2,
und wobei insbesondere die EA 1 und EA 2 Gummi Lac sind, die MII 1 und MII 2 eine Säure, insbesondere Ascorbinsäure, Zitronensäure, Essigsäure oder Salzsäure sind oder wobei die EA 1 und EA 2 aus Alginaten einwertiger Kationen, insbesondere Na⁺-Alginaten und K⁺-Alginaten ausgewählt werden und wobei die MII 1 und MII 2 aus Salzen ausgewählt werden, wobei das Kation ein zweiwertiges Metallkation, insbesondere Ca²⁺, Mg²⁺ oder Cu²⁺, ist, wobei das Salz insbesondere CaCl₂, MgCl₂, Calciumlactat, Calciumgluconat, Calciumcitrat, Calciumphosphat, Magnesiumlactat, Magnesiumgluconat, Magnesiumcitrat, Magnesiumphosphat, CuCl₂, Kupfersulfat, Kupfersulfatpentahydrat, Kupfernitrat, Kupfernitrathexahydrat oder Kupferphosphat ist,
oder
❖ wobei die erste Schicht EA 1 ist und wobei m gleich 1 ist, entsprechend einer Mikrokapseln umfassend:
- einen Kern,
- eine Beschichtung bestehend aus oder umfassend eine wasserunlösliche Verbindung, insbesondere Ethylcellulose,
- eine erste Schicht EA 1,
- eine zweite Schicht MII 1,
- eine dritte Schicht EA 2 und
- eine vierte Schicht MII 2,
und wobei insbesondere die EA 1 und EA 2 Gummi Lac sind, die MII 1 und MII 2 eine Säure, insbesondere Ascorbinsäure, Zitronensäure, Essigsäure oder Salzsäure sind,
oder
❖ wobei die erste Schicht MII ist und wobei m gleich 2 ist, entsprechend einer Mikrokapseln umfassend:
- einen Kern,
- eine erste Schicht MII 1,
- eine zweite Schicht EA 1 und
- eine dritte Schicht MII 2,
- eine vierte Schicht EA 2 und
- eine fünfte Schicht MII 2,
und wobei insbesondere die EA 1 und EA 2 aus Alginaten einwertiger Kationen, insbesondere Na⁺-Alginaten und K⁺-Alginaten ausgewählt werden und wobei die MII 1 und MII 2 aus Salzen ausgewählt werden, wobei das Kation ein zweiwertiges Metallkation, insbesondere Ca²⁺ oder Mg²⁺ ist, wobei das Salz insbesondere CaCl₂, MgCl₂, Calciumlactat, Calciumgluconat, Calciumcitrat, Calciumphosphat, Magnesiumlactat, Magnesiumgluconat, Magnesiumcitrat oder Magnesiumphosphat ist,
oder
❖ wobei die erste Schicht MII 1 ist und wobei m gleich 3 ist, entsprechend einer Mikrokapsel umfassend:
- einen Kern,
- eine erste Schicht MII 1,
- eine zweite Schicht EA 1 und
- eine dritte Schicht MII 2,
- eine vierte Schicht EA 2,
- eine fünfte Schicht MII 2,
- eine sechste Schicht EA 2,
- eine siebte Schicht MII 2,
und wobei insbesondere die EA 1 und EA 2 aus Alginaten einwertiger Kationen, insbesondere Na⁺-Alginaten und K⁺-Alginaten ausgewählt werden und wobei die MII 1 und MII 2 aus Salzen ausgewählt werden, wobei das Kation ein zweiwertiges Metallkation, insbesondere Ca²⁺ oder Mg²⁺ ist, wobei das Salz insbesondere CaCl₂, MgCl₂, Calciumlactat, Calciumgluconat, Calciumcitrat, Calciumphosphat, Magnesiumlactat, Magnesiumgluconat, Magnesiumcitrat oder Magnesiumphosphat ist.

14. Verfahren für die Herstellung von Mikrokapseln nach einem der Ansprüche 1 bis 13, umfassend
(a) einen Schritt des Spritzens einer Mischung eines wasserlöslichen oder organischen Lösungsmittels, insbesondere Ethanol, von löslichem Verkapselungsmittel (EA 1) oder Mittel zum Auslösen von Wasserunlöslichkeit des Verkapselungsmittels (MII 1) auf einen Kern bestehend aus oder umfassend einen oxidierbaren Aktivstoff (OA), wobei der Kern wahlweise durch eine Vorbeschichtung umgeben ist bestehend aus oder umfassend eine Antioxidationsmittelverbindung, wobei der Kern, der wahlweise durch eine Vorbeschichtung umgeben ist bestehend aus oder umfassend die Antioxidationsmittelverbindung X, wahlweise durch eine Beschichtung umgeben ist bestehend aus oder umfassend eine wasserunlösliche Verbindung,
um Teilchen zu erhalten, die einen von einer ersten Schicht umgebenen Kern umfassen,
(b) einen Schritt des Spritzen einer Mischung eines wasserlöslichen oder organischen Lösungsmittels, insbesondere Ethanol, von löslichem Verkapselungsmittel (EA 1), wenn die erste Schicht ein Mittel zum Auslösen von Wasserunlöslichkeit des EA ist, oder Mittel zum Auslösen von Wasserunlöslichkeit eines wasserlöslichen oder organischen Lösungsmittels, insbesondere Ethanol, löslichem EA (MII 2), wenn die erste Schicht EA 1 ist, auf Teilchen, die in Schritt (a) erhalten worden sind, um Teilchen zu erhalten, die einen Kern umfassen, der von einer ersten und einer zweiten Schicht umgeben ist,
(c) (m + n) Schritte des Spritzens abwechselnd n mal von Mischungen von wasserlöslichem oder organischem Lösungsmittel, insbesondere Ethanol, löslichen Verkapselungsmitteln (EA 2) und Wasser und m mal von Mischungen von Mitteln zum Auslösen von Wasserunlöslichkeit der Verkapselungsmittel (MII 2) und Wasser, beginnend mit dem Spritzen einer Mischung derselben Natur wie die Natur des Spritzens von Schritt (a) auf Teilchen, die in Schritt (b) erhalten worden sind, um die Mikrokapseln zu erhalten,
wobei m und n die obige Definition aufweisen,
die letzte Schicht MII 2 ist,
wobei jedem EA 2 Mittel zum Auslösen von Wasserunlöslichkeit (MII 2) des EA2 vorausgeht und/oder folgt,
mit der Maßgabe, dass:
wenn die erste Schicht MII 1 ist und die zweite Schicht EA 1 ist, und wenn m gleich 1 ist, dann sind MII 2 Mittel zum Auslösen von Wasserunlöslichkeit von EA 1,
wobei das Verfahren insbesondere, nach den Spritzschritten einen Schritt des Trocknens der Mikrokapseln umfasst, um getrocknete Mikrokapseln zu erhalten.

15. Verwendung von Mikrokapseln nach einem der Ansprüche 1 bis 13 für die Herstellung einer Nahrungsmittel- oder Getränkezusammensetzung,
wobei insbesondere die Nahrungsmittel- oder Getränkezusammensetzung die Mikrokapseln und:
- fermentierte Molkereiprodukte, insbesondere Joghurts, noch spezifischer Probiotika enthaltende Joghurts,
- unfermentierte Molkereiprodukte,
- Milch von Tieren oder aus Pflanzen, insbesondere Mandelmilch, Kokosmilch, Reismilch und Sojamilch, wobei die Zusammensetzung unfermentiert oder fermentiert ist,
- eine oder mehrere Früchte zusätzlich zu den Mikrokapseln,
- ein oder mehrere Gemüse zusätzlich zu den Mikrokapseln,
- Wasser, einen oder mehrere Zucker und/oder Süßungsmittel und Aromastoff(e) umfasst,
wobei insbesondere die Getränkezusammensetzung folgendes umfasst:
• die Mikrokapseln, wobei der OA insbesondere SOD ist,
• Wasser,
• wahlweise Obstsaft,
• wahlweise mindestens ein Vitamin, insbesondere Vitamin C oder Riboflavin.

## Revendications

1. Microcapsule consistant en ou contenant :
• Un coeur consistant en ou contenant un Actif Oxydable (OA)
ledit coeur étant optionnellement entouré par un pré-enrobage consistant en ou contenant un composé antioxydant X,
ledit coeur, optionnellement entouré par un pré-enrobage consistant en ou contenant ledit composé antioxydant X, étant optionnellement entouré par un enrobage consistant en ou contenant un composé insoluble dans l'eau,
• une première couche entourant le coeur avec l'un ou l'autre de:
∘ un agent d'encapsulation (EA 1) soluble dans l'eau ou soluble dans un solvant organique, en particulier l'éthanol, ou
∘ des moyens pour induire l'insolubilité dans l'eau dudit agent d'encapsulation (MII 1)
• une seconde couche entourant la première couche avec :
∘ un agent d'encapsulation (EA 1) soluble dans l'eau ou soluble dans un solvant organique, en particulier l'éthanol, quand la première couche est constituée de moyens pour induire l'insolubilité dudit agent d'encapsulation
∘ des moyens pour induire l'insolubilité dans l'eau d'un agent d'encapsulation (MII 1) soluble dans l'eau ou soluble dans un solvant organique, en particulier l'éthanol, quand la première couche est ledit agent d'encapsulation,
la première ou la seconde couche du coeur comprenant optionnellement un agent antioxydant Y,
et
• une alternance de n couches d'agent d'encapsulation (EA 2) soluble dans l'eau ou soluble dans un solvant organique, en particulier l'éthanol et de m couches de moyens pour provoquer l'insolubilité dudit agent d'encapsulation (MII 2), entourant la seconde couche et commençant avec une couche de la même nature que la première,
m étant égal à 1, 2, 3, 4, 5, 6, 7, 8, 9 ou 10,
n = m quand la première couche est ledit EA 1, ou n = m - 1, quand la première couche est ledit MII 1,
la dernière couche étant MII 2,
chaque EA 2 étant précédé et/ou suivi par des moyens d'induction de l'insolubilité dans l'eau (MII 2) dudit EA 2,
à la condition que :
quand la première couche est MII et que la seconde couche est EA 1, et quand m est égal à 1, alors MII 2 sont des moyens pour induire l'insolubilité de EA 1.

2. Microcapsule selon la revendication 1, consistant en ou contenant :
• un coeur consistant en ou contenant un Actif Oxydable (OA),
ledit coeur étant optionnellement entouré par un pré-enrobage, consistant en ou contenant un composé antioxydant X,
• une première couche entourant le coeur avec l'un ou l'autre de :
∘ un agent d'encapsulation (EA 1) soluble dans l'eau ou soluble dans un solvant organique, en particulier l'éthanol, ou
∘ des moyens pour induire l'insolubilité dans l'eau dudit agent d'encapsulation (MII 1)
• une seconde couche entourant la première couche avec :
∘ un agent d'encapsulation (EA 1) soluble dans l'eau ou dans un solvant organique, en particulier l'éthanol, quand la première couche est constituée de moyens pour induire l'insolubilité dudit agent d'encapsulation,
∘ des moyens pour induire l'insolubilité d'un agent d'encapsulation (MII 1) soluble dans l'eau ou soluble dans un solvant organique, en particulier l'éthanol, quand la première couche est ledit agent d'encapsulation,
la première ou la seconde couche du coeur comprend optionnellement un agent antioxydant Y,
et
• un alternance de n couches dudit EA 1 et de m couches dudit MII, entourant la seconde couche et commençant avec une couche de la même nature que la première couche,
m étant égal à 1, 2, 3, 4, 5, 6, 7, 8, 9 ou 10,
n = m quand la première couche est ledit EA 1, or n = m - 1, quand la première couche est ledit MII 1, la dernière couche étant MII 1.

3. Microcapsule selon la revendication 1, dans laquelle :
• les EA 2 desdites n couches sont identiques,
• les M112 desdites m couches sont identiques,
• EA1 n'est pas identique auxdits EA 2 et/ou MII 1 n'est pas identique auxdits MII 2

4. Microcapsule selon les revendications 1 à 3, dans laquelle
• lesdits moyens pour induire l'insolubilité sont un agent chimique réagissant avec lesdits EA ou
• lesdits moyens pour obtenir l'insolubilité sont un acide, une base ou une solution tampon.

5. Microcapsule selon les revendications 1 à 4 dans laquelle, lesdites couches sont telles que, quand ladite microcapsule est placée dans un milieu alimentaire, cosmétique ou pharmaceutique acceptable :
• ledit OA n'est pas dégradé par le ou les éléments dudit milieu, et
• ledit ou lesdits éléments du milieu ne sont pas dégradés par ledit OA

6. Microcapsule selon les revendications 1 à 5, dans laquelle, la masse dudit OA est dans la gamme de 40 à 99.5%, préférentiellement de 60 à 98%, plus préférentiellement de 70 à 95%, de la masse totale de ladite microcapsule.

7. Microcapsule selon les revendications 1 à 6, dans laquelle la taille de ladite microcapsule est dans la gamme de 1 µm à 3 mm, préférentiellement de 50 à 1000 µm, plus préférentiellement de 100 à 600 µm.

8. Microcapsule selon les revendications 1 à 7, dans laquelle ledit OA est dans un état cristallin ou amorphe, en particulier une microcapsule dans laquelle ledit coeur consiste en ou comprend un OA dans un état cristallin ou amorphe et au moins un élément supplémentaire sélectionné parmi les agents séchant, les agents antioxydant et les agents émulsifiants.

9. Microcapsule selon les revendications 1 à 8, dans laquelle lesdits EA solubles dans l'eau sont sélectionnés parmi les alginates liés à des cations monovalents, en particulier l'alginate de Na⁺ et l'alginate de K⁺, en particulier dans laquelle lesdits EA sont sélectionnés parmi les alginates lié à des cations monovalent s, en particulier des alginates de Na⁺ et des alginates de K⁺, et dans laquelle lesdits MII sont un sel dans lequel le cation est un cation métallique divalent, plus particulièrement Ca²⁺ ou Mg²⁺, le dit sel étant plus particulièrement CaCl₂, MgCl₂, le lactate de calcium, le gluconate de calcium, le citrate de calcium, le lactate de magnésium, le gluconate de magnésium, le citrate de magnésium, ou le phosphate de magnésium.

10. Microcapsule selon les revendications 1 à 8 dans laquelle lesdits EA sont de la gomme-laque, en particulier dans laquelle lesdits EA sont la gomme-laque et dans laquelle lesdits MII sont un acide, en particulier l'acide ascorbique, l'acide citrique, l'acide acétique ou l'acide chlorhydrique.

11. Microcapsule selon les revendications 1 à 10,
❖ dans laquelle ledit OA :
• est sélectionné parmi le groupe comprenant la vitamine B5, la vitamine B6, la vitamine B8, la vitamine B9, la vitamine A, la vitamine D3, la vitamine K, la vitamine E et la vitamine C, en particulier la vitamine C naturelle, la vitamine C synthétique, ou les sels d'acide L-ascorbique, plus particulièrement le L-ascorbate de sodium, le L-ascorbate de calcium et le L-ascorbate de fer, ou
• comprend de la vitamine C, le dit OA étant en particulier un jus de fruit comprenant de la vitamine C, en particulier le jus d'orange, le jus de kiwi, le jus de canneberge, le jus d'acérola, ou le jus de goji, ledit jus de fruit étant optionnellement concentré ou séché,
ou
❖ dans laquelle ledit OA est sélectionné parmi le groupe comprenant le dihydroxyacétone (DHA), une huile enrichie en oméga 3 ou en oméga 6, et des enzymes oxydables, en particulier la SuperOxy Dismutase (SOD),
ledit OA étant en particulier du SOD, plus particulièrement de la SOD lyophilisée ou de la SOD atomisée
ou
❖ dans laquelle le dit OA est un sel constitué d'un anion organique ou inorganique et d'un cation métallique au degré d'oxydation +2, ledit sel étant en particulier sélectionné parmi le groupe comprenant le sulfate de fer (II), le sulfate de manganèse (II), le sulfate de chrome (II), l'oxalate de fer (II), l'oxalate de manganèse (II), l'oxalate de chrome (II), l'acétate de fer (II), l'acétate de manganèse (II) et l'acétate de chrome (II).

12. Microcapsule selon les revendications 1 à 11, comprenant au moins un antioxydant, ledit antioxydant :
❖ est compris dans le dit coeur, ou
❖ est, ou est compris dans, ledit enrobage entourant ledit coeur, ou
❖ est compris dans la première ou la seconde couche
en particulier une microcapsule, dans laquelle ledit antioxydant est choisi parmi le groupe comprenant l'ascorbate de sodium, le palmitate d'ascorbyle, la vitamine E, l'acétate de tocophérol, la superoxydismutase (SOD), les polyphénols et leurs mélanges, en particulier un mélange de palmitate d'ascorbyle et d'acétate de tocophérol,
en particulier une microcapsule, dans laquelle ledit coeur est entouré par un pré-enrobage consistant en ou comprenant un composé antioxydant choisi parmi le groupe comprenant l'ascorbate de sodium, le palmytate d'ascobyle, la vitamine E, l'acétate de tocophérol, la superoxydismutase (SOD), les polyphénols et leurs mélanges, en particulier un mélange de palmitate d'ascorbyle et d'acétate de tocophérol, ledit antioxydant étant en particulier la SOD,
en particulier une microcapsule, dans laquelle ladite première ou seconde couche du coeur comprend par ailleurs un composé antioxydant choisi parmi le groupe comprenant l'ascorbate de sodium, le palmytate d'ascobyle, la vitamine E, l'acétate de tocophérol, la superoxydismutase (SOD), les polyphénols et leurs mélanges, en particulier un mélange de palmitate d'ascorbyle et d'acétate de tocophérol,
en particulier une microcapsule, dans laquelle ledit coeur est entouré par un pré-enrobage qui consiste en ou qui comprend un premier composé antioxydant, choisi parmi le groupe comprenant l'ascorbate de sodium, le palmytate d'ascobyle, la vitamine E, l'acétate de tocophérol, la superoxydismutase (SOD), les polyphénols et leurs mélanges, en particulier un mélange de palmitate d'ascorbyle et d'acétate de tocophérol,
ledit premier antioxydant étant en particulier la SOD,
et dans laquelle ladite première ou seconde couche du coeur comprend par ailleurs un second composée antioxydant choisi parmi le groupe comprenant l'ascorbate de sodium, le palmytate d'ascobyle, la vitamine E, l'acétate de tocophérol, la superoxydismutase (SOD), les polyphénols et leurs mélanges, en particulier un mélange de palmitate d'ascorbyle et d'acétate de tocophérol,
ledit second antioxydant étant en particulier un mélange de palmitate d'ascorbyle et d'acétate de tocophérol.

13. Microcapsule selon les revendications 1 à 12,
• dans laquelle la première couche est MII et dans laquelle m est égal à 1, correspondant à une microcapsule comprenant :
∘ un coeur,
∘ une première couche de MII 1
∘ une seconde couche de EA 1, et
∘ une troisième couche de Mil 2,
MII 2 étant des moyens pour induire l'insolubilité dans l'eau de EA 1, et
en particulier dans laquelle ledit EA 1 est choisi parmi les alginates liés à un cation monovalent, en particulier les alginates de Na⁺ et les alginates de K⁺ et lesdits MII 1 et MII 2 sont sélectionnés parmi les sels dans lesquels le cation est un cation métallique divalent, en particulier Ca²⁺, Mg²⁺ ou Cu²⁺, ledit sel étant en particulier CaCl₂, MgCl₂, le lactate de calcium, le gluconate de calcium, le citrate de calcium, le phosphate de calcium, le lactate de magnésium, le gluconate de magnésium, le citrate de magnésium, le phosphate de magnésium, CuCl₂, le sulfate de cuivre, le sulfate de cuivre pentahydraté, le nitrate de cuivre, le nitrate de cuivre hexahydraté ou le phosphate de cuivre,
ou
❖ dans laquelle la première couche est EA 1 et dans laquelle m est égal à 1, correspondant à une microcapsule comprenant :
∘ Un coeur,
∘ Une première couche de EA 1,
∘ Une seconde couche de MII1,
∘ une troisième couche de EA2, et
∘ une quatrième couche de MII 2,
et en particulier dans laquelle, lesdits EA 1 et EA 2 sont la gomme-laque, lesdits MII 1 et MII 2 sont un acide, en particulier l'acide ascorbique, l'acide citrique ou l'acide chlorhydrique ou dans laquelle lesdits EA 1 et EA 2 sont choisis parmi les alginates liés à un cation monovalent, en particulier l'alginate de Na⁺ et l'alginate de K⁺et lesdits MII 1 et MII 2 sont sélectionnés parmi les sels dans lesquels le cation est un cation métallique divalent, en particulier Ca²⁺, Mg²⁺ ou Cu²⁺, le dit sel étant en particulier CaCl₂, MgCl₂, le lactate de calcium, le gluconate de calcium, le citrate de calcium, le phosphate de calcium, le lactate de magnésium, le gluconate de magnésium, le citrate de magnésium, le phosphate de magnésium, CuCl₂, le sulfate de cuivre, le sulfate de cuivre pentahydraté, le nitrate de cuivre, le nitrate de cuivre hexahydraté, le phosphate de cuivre,
ou
❖ dans laquelle la première couche est EA1 et dans laquelle m est égal à 1, correspondant à la microcapsule comprenant :
∘ un coeur,
∘ un enrobage consistant en ou comprenant un composé insoluble dans l'eau, en particulier l'éthylcellulose,
∘ une première couche de EA 1,
∘ une seconde couche de MII 1,
∘ une troisième couche de EA 2, et
∘ une quatrième couche de MII 2,
et en particulier dans laquelle lesdits EA 1 et EA 2 sont la gomme Lac, et lesdits MII1 et MII 2 sont un acide, en particulier l'acide ascorbique, l'acide citrique, l'acide acétique ou l'acide chlorhydrique,
ou
• dans laquelle la première couche est MII et dans laquelle m est égal à 2, correspondant à une microcapsule comprenant :
∘ un coeur,
∘ une première couche de MII 1
∘ une seconde couche de EA 1, et
∘ une troisième couche de MII 2,
∘ une quatrième couche de EA2, et
∘ une cinquième couche de MII 2
en particulier dans laquelle lesdits EA 1 et EA 2 sont choisis parmi les alginates liés à un cation monovalent, en particulier les alginates Na⁺ et les alginates K⁺ et lesdits MII 1 et MII 2 sont sélectionnés parmi les sels dans lesquels le cation est un cation métallique divalent, en particulier Ca²⁺ ou Mg²⁺ le dit sel étant en particulier CaCl₂, MgCl₂, le lactate de calcium, le gluconate de calcium, le citrate de calcium, le phosphate de calcium, le lactate de magnésium, le gluconate de magnésium, le citrate de magnésium, ou le phosphate de magnésium,
ou
• dans laquelle la première couche est MII et dans laquelle m est égal à 3, correspondant à une microcapsule comprenant :
∘ Un coeur,
∘ Une première couche de MII 1
∘ Une seconde couche de EA 1, et
∘ Une troisième couche de MII 2,
∘ Une quatrième couche de EA2,
∘ Une cinquième couche de MII 2
∘ Une sixième couche de EA2, et
∘ Une septième couche de MII 2
en particulier dans laquelle lesdits EA 1 et EA 2 sont choisis parmi les alginates liés à un cation monovalent, en particulier les alginates de Na⁺ et les alginates de K⁺ et lesdits MII et MII 2 sont sélectionnés parmi les sels dans lesquels le cation est un cation métallique divalent, en particulier Ca²⁺ ou Mg²⁺ le dit sel étant en particulier CaCl₂, MgCl₂, le lactate de calcium, le gluconate de calcium, le citrate de calcium, le phosphate de calcium, le lactate de magnésium, le gluconate de magnésium, le citrate de magnésium, ou le phosphate de magnésium.

14. Procédé de préparation des microcapsules selon les revendications 1 à 13 comprenant :
(a). une étape de pulvérisation d'un mélange d'un agent d'encapsulation (EA 1) soluble dans l'eau ou dans un solvant organique, en particulier l'éthanol, ou de moyens pour induire l'insolubilité dudit agent d'encapsulation (MII 1), sur un coeur consistant en ou comprenant un Actif Oxydable (OA), ledit coeur étant optionnellement entouré par un pré-enrobage consistant en ou comprenant un composé antioxydant, ledit coeur optionnellement entouré par un pré-enrobage consistant ou comprenant le dit composé antioxydant X, étant optionnellement entouré par un enrobage consistant en ou comprenant un composé insoluble dans l'eau,
pour obtenir des particules comprenant un coeur entouré par une première couche
(b). une étape de pulvérisation d'un mélange d'un agent d'encapsulation (EA 1) soluble dans l'eau ou dans un solvant organique, en particulier l'éthanol quand la première couche est des moyens d'induction de l'insolubilité dans l'eau dudit EA, ou des moyens pour induire l'insolubilité (MII 2) d'un EA soluble dans l'eau ou dans un solvant organique, en particulier dans l'éthanol quand la première couche est ledit EA1, sur les particules obtenues à l'étape (a), pour obtenir des particules comprenant un coeur entouré par une première et une seconde couche
(c). (m+n) étapes de pulvérisations en alternance de n fois les mélanges d'agents d'encapsulations (EA2) solubles dans l'eau ou dans un solvant organique, en particulier l'éthanol, et d'eau, et de m fois les mélanges de moyens pour induire l'insolubilité dans l'eau desdits agents d'encapsulation (MII 2) et d'eau, commençant avec la pulvérisation d'un mélange de la même nature que la pulvérisation de l'étape (a), sur les particules obtenue à l'étape (b), pour obtenir lesdites microcapsules,
m et n étant défini comme précédemment
la dernière couche étant MII 2
chaque EA 2 étant précédé et / ou suivi par des moyens pour induire l'insolubilité (MII 2) dudit EA 2
avec la condition que :
quand la première couche est MII et la seconde couche est EA 1, et quand m est égal à 1, alors MII 2 est des moyens pour induire l'insolubilité dans l'eau de EA 1,
ledit procédé comprend en particulier, après lesdites étapes de pulvérisation, une étape de séchage desdites microcapsules pour obtenir des microcapsules séchée.

15. Utilisation des microcapsules selon les revendications 1 à 13 pour la préparation d'un aliment ou d'une boisson, en particulier, ladite composition de nourriture ou de boisson comprenant lesdites microcapsules et :
• des produits laitiers fermentés, en particulier des yaourts, plus particulièrement des yaourts contenant des probiotiques,
• des produits laitiers non fermentés,
• un lait animal ou végétal, en particulier le lait d'amande, le lait de coco, le lait de riz, et le lait de soja, ladite composition étant fermentée ou non fermentée,
• un fruits ou plus en ajout desdites microcapsules
• un légume ou plus en ajout desdites microcapsules
• de l'eau, un sucre ou plus et/ou un édulcorant, et un ou des arômes,
en particulier, ladite composition de boisson comprenant :
• lesdites microcapsule, dans lesquelles ledit OA est en particulier la SOD,
• de l'eau,
• optionnellement un jus de fruit,
• optionnellement au moins une vitamine, en particulier la vitamine C ou la riboflavine.
